# EUROPEAN PATENT SPECIFICATION

(11) **EP 4 248 753 B1**
(45) Date of publication and mention of the grant of the patent: **10.06.2026**
(21) Application number: 21894391.8
(22) Date of filing: 15.10.2021
(51) Int. Cl.: A21B 5/04, G06Q 50/04

(54) **BAUMKUCHEN BAKING SYSTEM, PROGRAM, AND BAUMKUCHEN MANUFACTURING METHOD**
BAUMKUCHEN-BACKSYSTEM, PROGRAMM UND VERFAHREN ZUR HERSTELLUNG VON BAUMKUCHEN
SYSTÈME DE CUISSON DE BAUMKUCHEN, PROGRAMME, ET PROCÉDÉ DE FABRICATION DE BAUMKUCHEN

(30) Priority: 20.11.2020 WO PCT/JP2020/043372; 03.03.2021 JP 2021033818
(43) Date of publication of application: 27.09.2023
(73) Proprietor: Juchheim Co., Ltd., Kobe-shi, Hyogo 650-0046 (JP)
(72) Inventor: KAWAMOTO, Hideo, Hyogo 650-0046 (JP)
(74) Representative: J A Kemp LLP
(86) International application number: PCT/JP2021/038218
(87) International publication number: WO 2022/107517

(56) References cited:
- WO-A1-2018/146770
- WO-A1-2019/117177
- DE-A1- 102010 002 692
- DE-A1- 102019 106 329
- JP-A- 2001 272 045
- JP-A- 2006 129 781
- JP-A- 2017 506 169
- JP-A- 2019 124 464
- JP-A- 2020 166 557
- JP-A- H 089 932

## Description

### TECHNICAL FIELD

The present invention relates to a computer system using a Baumkuchen baking machine.

### BACKGROUND ART

A Baumkuchen baking machine rotates a rotating spit in its oven, where the rotating spit has Baumkuchen batter applied thereto. This allows the outer peripheral surface of the batter to be baked generally uniformly around its entire circumference. When the outer peripheral surface has been properly baked, the Baumkuchen baking machine applies another layer of batter thereto, and again rotates the spit in the oven. Repeating application of batter and baking of the outer peripheral surface of the batter during its rotation in the oven results in a Baumkuchen (or "tree cake") featuring layers that look like growth rings.

The doneness of a Baumkuchen is important as it significantly affects the cake's quality. As such, a skilled pastry chef operates the Baumkuchen baking machine to bake a Baumkuchen with the appropriate doneness.

For example, JP 2021-010333 A discloses a Baumkuchen baking machine. This Baumkuchen baking machine includes a rotating drum located in a baking furnace and a driving mechanism that controls the revolution movement of six suspended rods suspended in the rotating drum and the rotation movement of the suspended rods, where the revolution movement involves the rods successively revolving from a first revolution interruption position to a sixth revolution interruption position. The Baumkuchen baking machine further includes a first partitioning shutter and a second partitioning shutter that operate to advance and retreat such that a portion of the revolution orbit can be partitioned in synchronization with the interruptive revolution movement by the driving mechanism. DE 10 2010 002692 Al and DE 10 2019 106329 Al disclose background art to the invention.

### PRIOR ART DOCUMENTS

### PATENT DOCUMENTS

Patent Document 1: JP 2021-010333 A

### SUMMARY OF THE INVENTION

### PROBLEMS TO BE SOLVED BY THE INVENTION

Conventional Baumkuchen baking machines, such as that described above, are capable of baking a plurality of Baumkuchen simultaneously. However, it is difficult for small-scale confectionaries, such as community-rooted confectionaries, for example, to introduce such large-scale Baumkuchen baking machines. Even if they manage to introduce such Baumkuchen baking machines, they have difficulty offering Baumkuchen if they employ no pastry chef able to perform Baumkuchen baking operations while observing doneness. However, the number of Baumkuchen chefs is limited. For example, in Germany, where the Baumkuchen originated, few small-scale confectionaries produce and sell Baumkuchen. The Baumkuchen is not a familiar cake for ordinary German citizens, but a special, high-class cake.

In view of this, the present application discloses a Baumkuchen baking system, a Baumkuchen baking assist system, a program, and a method of manufacturing a Baumkuchen capable of manufacturing high-quality Baumkuchen without a Baumkuchen baking machine with a complicated mechanism or operation by a skilled pastry chef.

### MEANS FOR SOLVING THE PROBLEMS

A system according to the invention includes: a server; and a Baumkuchen baking system comprising:a communication unit adapted to communicate data with the server;a Baumkuchen baking machine including an oven, a batter container, a roller capable of moving between a baking position for the oven and the batter container, and a camera adapted to photograph a portion of an outer peripheral surface of layered Baumkuchen batter on the roller; and a control unit adapted to control the Baumkuchen baking machine.The server is capable of accessing a storage unit adapted to store a plurality of learning-enhanced models obtained by learning a doneness determination or baking control based on an image of an outer peripheral surface of layered Baumkuchen batter on the roller being baked. The control unit includes an automatic control unit adapted to determine doneness or baking control, using a learning-enhanced model of the plurality of learning-enhanced models provided by the server, based on an image, captured by the camera, of an outer peripheral surface of Baumkuchen batter currently being baked at a baking position for the oven and use a result of determination to automatically control baking of each layer of the Baumkuchen batter.Each learning-enhanced model is associated with a baking condition, the control unit further includes a user interface unit adapted to receive, from an operator, input of a baking condition for a Baumkuchen to be manufactured. The server is configured to provide the learning-enhanced model associated with the baking condition input by the operator to the control unit.

### EFFECTS OF THE INVENTION

The present disclosure enables manufacturing high-quality Baumkuchen without a Baumkuchen baking machine with a complicated mechanism or operation by a skilled pastry chef.

### BRIEF DESCRIPTION OF THE DRAWINGS

[FIG. 1] FIG. 1 illustrates an exemplary configuration of an entire system of an embodiment.
[FIG. 2] FIG. 2 illustrates an exemplary configuration of the control unit of the Baumkuchen baking system.
[FIG. 3] FIG. 3 is a flow chart showing an exemplary process for baking a Baumkuchen by automatic control.
[FIG. 4] FIG. 4 is a flow chart showing an exemplary process for baking a Baumkuchen by remote control.
[FIG. 5] FIG. 5 is a flow chart illustrating an exemplary control process of step S205 of FIG. 4.
[FIG. 6] FIG. 6 illustrates an example of an image displayed in the process of step S205 of FIG. 4.
[FIG. 7] FIG. 7 illustrates an exemplary operation of the server shown in FIG. 1.
[FIG. 8] FIG. 8 is a front view of the Baumkuchen baking machine according to an embodiment.
[FIG. 9] FIG. 9 is a side view of the Baumkuchen baking machine shown in FIG. 1.
[FIG. 10] FIG. 10 illustrates the machine with the roller 3 at the batter application position.
[FIG. 11] FIG. 11 is a flow chart showing an exemplary control process for the Baumkuchen baking machine 1 by the control unit 8.
[FIG. 12] FIG. 12 shows an example of an image obtained through photographing by the camera 7.
[FIG. 13] FIG. 13 illustrates an exemplary configuration of a neural network used for the decision process.
[FIG. 14] FIG. 14 shows an example of a group of images obtained by the control unit 8 from initiation of baking until termination of baking.
[FIG. 15] FIG. 15 is a flow chart illustrating an exemplary process for collecting teaching data for the learning process based on the baking operation on the Baumkuchen baking machine 1.
[FIG. 16] FIG. 16 shows a variation of an entire system of an embodiment.
[FIG. 17] FIG. 17 shows examples of contents indicated in the batter recipe data.

### EMBODIMENTS FOR CARRYING OUT THE INVENTION

The inventors used sensors to obtain information about operations for baking Baumkuchen through pastry chefs' operations on a Baumkuchen baking machine, and analyzed the information. The inventors attempted to create data about skills of pastry chefs and reproduce chef skills by automatic control using that data. After trial and error, the inventors discovered that it is particularly effective in reproducing chef skills with data to use machine learning to create data about chefs observing the baked color of the outer peripheral surface of Baumkuchen batter to determine doneness or control baking. They arrived at the following embodiments based on this discovery.

### (Arrangement 1)

A Baumkuchen baking system according to an embodiment of the present invention includes: a communication unit adapted to communicate data with a server; a Baumkuchen baking machine including an oven, a batter container, a roller capable of moving between a baking position for the oven and the batter container, and a camera adapted to photograph a portion of an outer peripheral surface of layered Baumkuchen batter on the roller; and a control unit adapted to control the Baumkuchen baking machine. The server is capable of accessing a storage unit adapted to store a learning-enhanced model obtained by learning a doneness determination or baking control based on an image of an outer peripheral surface of layered Baumkuchen batter on the roller being baked. The control unit includes an automatic control unit adapted to determine doneness or baking control using the learning-enhanced model provided by the server based on an image, captured by the camera, of the outer peripheral surface of Baumkuchen batter currently being baked at a baking position for the oven and use a result of determination to automatically control baking of each layer of the Baumkuchen batter.

In Arrangement 1 above, the Baumkuchen baking machine of the Baumkuchen baking system includes a batter container, a roller, a camera and a control unit. The server provides a learning-enhanced model to the Baumkuchen baking system. A learning-enhanced model is data obtained by learning the relationship between an image of the outer peripheral surface of layered Baumkuchen batter on the roller being baked, on the one hand, and a doneness determination or baking control, on the other hand. The Baumkuchen baking system is capable of determining doneness or baking control using a learning-enhanced model based on an image from the camera. This allows the server and the Baumkuchen baking system to share the way of determining doneness or of controlling baking based on the color of the outer peripheral surface of the batter during baking of each Baumkuchen batter layer. The inventors discovered that sharing this aspect facilitates production of high-quality Baumkuchen by a Baumkuchen baking system. The Baumkuchen baking system is capable of producing high-quality Baumkuchen without introducing a Baumkuchen baking machine with a complicated mechanism or a skilled pastry chef, for example. This facilitates the business of offering Baumkuchen.

The automatic control unit may, based on the result of determination, automatically control when to terminate baking of one layer by moving the roller having the layered Baumkuchen batter thereon from the baking position for the oven to another position. This enables automatic control of the baking time for each layer using the learning-enhanced model.

The storage unit accessible to the server may store a plurality of learning-enhanced models. A baking condition is stored in association with each of the learning-enhanced models. The control unit further includes a user interface unit adapted to receive, from the operator, input of baking conditions for the Baumkuchen to be manufactured. The automatic control unit performs the automatic control using the learning-enhanced model provided by the server, where the model is a learning-enhanced model associated with the baking conditions input by the operator. This enables appropriate automatic control depending on baking conditions. The baking conditions may include, for example, at least one of a condition relating to the chef who has contributed to creation of the teaching data used in learning for a learning-enhanced model, a condition relating to batter (e.g., batter ingredients or physical properties of the batter), the size of the roller (i.e., spit), or the number of batter layers.

The learning for generating a learning-enhanced model (i.e., machine learning) may be, for example, deep learning using a neural network. The learning-enhanced model may be, for example, a data set that receives images as input and providing, as output, results of determination of doneness (e.g., a value indicating doneness or whether the doneness is appropriate) or baking control (e.g., a value for controlling the baking time). The data set includes, for example, parameters that indicate weightings connecting different layers in the neural network and whose values have been adjusted through machine learning. The model generation is not limited to learning using a neural network. For example, a learning-enhanced model may be generated by machine learning using regression analysis or decision tree. Examples of such machine learning techniques include, for example, linear regression, support vector machine, support vector regression, elastic net, logistic regression, and random forest. The learning-enhanced model may be generated through learning with the Baumkuchen baking machine that is to control baking using the learning-enhanced model, or may be generated through learning with another Baumkuchen baking machine.

### (Arrangement 2)

Starting from Arrangement 1 above, the storage unit accessible to the server may store a plurality of learning-enhanced models. The storage unit further stores, in association with each of the plurality of learning-enhanced models, chef data indicating a pastry chef who has contributed to creation of teaching data used for learning for this particular learning-enhanced model. The control unit may further include a user interface unit adapted to receive a designation of a chef by an operator. The automatic control unit may determine the doneness or baking control based on the image captured by the camera using the learning-enhanced model provided by the server and associated with the chef data indicating the pastry chef.

The inventors discovered that the doneness determination and baking control based on the baked color of the outer peripheral surface of the batter slightly vary depending on the chef, which affects the quality of a Baumkuchen and produces a chef-specific quality. In Arrangement 2 above, the server is capable of providing a chef-specific learning-enhanced model. With automatic control using the learning-enhanced model associated with the designated chef, the Baumkuchen baking system is capable of reproducing baking that approximates how the designated chef bakes.

"(Pastry) chef(s)" refers to a person or a group of persons with skills for operating a Baumkuchen baking machine to bake a Baumkuchen. Although not particularly limiting, the higher the level of the skills possessed by a chef, the better. The chef data indicating a chef may be data specifying an individual chef, or may be data specifying a group of chefs (e.g., an organization, a group or a team). A chef or chefs may be, for example, an individual called "meister" or "pâtissier", or may be a Baumkuchen-making confectionery, Baumkuchen manufacturing company, or any other organization that produces Baumkuchen.

### (Arrangement 3)

Starting from Arrangement 1 or 2 above, the control unit may further include a remote control unit adapted to provide, in real time, an image captured by the camera of the outer peripheral surface of the Baumkuchen batter to a remote terminal with which the remote control unit is capable of communicating data via the communication unit and, in accordance with an operation instruction received from the remote terminal, control baking of each layer of the Baumkuchen batter. In other implementations, the automatic control unit may be omitted from the control unit, and the control unit may include a remote control unit instead.

This allows the operator to control baking of a Baumkuchen while observing the doneness of the batter in images on the remote terminal in a location remote from the Baumkuchen baking machine. For example, the operation instruction received by the remote terminal may be an instruction to move, during baking of each batter layer, the roller of the Baumkuchen baking machine from the baking position to the batter application position.

The remote control unit may set, for each layer of the Baumkuchen batter, a baking-time range permitting control by an operation instruction from the remote terminal. This enables adjusting doneness depending on the preferences and/or skills of the operator controlling remotely while keeping the doneness of each Baumkuchen layer within a certain range.

### (Arrangement 4)

Starting from Arrangement 3 above, the remote control unit may use the learning-enhanced model provided by the server to determine the doneness of or baking control for the Baumkuchen batter based on the image captured by the camera of the outer peripheral surface of the Baumkuchen batter currently being baked in the Baumkuchen baking machine, and provide a result of determination to the remote terminal together with the image in real time. This allows the operator to operate the Baumkuchen baking machine from a remote location while observing, in real time, information about the doneness or baking control determined using the learning-enhanced model.

Starting from Arrangement 3 above, the remote control unit may use the learning-enhanced model provided by the server to determine the doneness of or baking control for the Baumkuchen batter based on the image captured by the camera of the outer peripheral surface of the Baumkuchen batter currently being baked in the Baumkuchen baking machine and use the result of determination to automatically control baking of each layer of the Baumkuchen batter and provide the image to the remote terminal in real time. In addition to such automatic control, the remote control unit may further control baking of each layer of the Baumkuchen batter based on an operation instruction received from the remote terminal. This arrangement enables receiving an operation instruction from the remote terminal while automatically controlling baking of each batter layer using the learning-enhanced model. For example, it is possible to give the remote operator some freedom in baking adjustment while ensuring a certain degree of quality by means of automatic control.

The remote control unit may receive a designation of a chef from the remote terminal and use the learning-enhanced model associated with the designated chef to determine the doneness or baking control. Thus, information indicating the doneness determination or baking control of the designated chef can be provided to the remote terminal in real time.

The remote control unit may provide, in real time, the image of the outer peripheral surface of the Baumkuchen batter captured by the camera to the remote terminal, receive, from the remote terminal, a result of determination of doneness or baking control by the remote terminal using the learning-enhanced model provided by the server based on the image, and use the received result of determination to control baking of each layer of the Baumkuchen batter.

### (Arrangement 5)

Starting from any one of Arrangements 1 to 5 above, the control unit may further include a learning unit adapted to create, as teaching data for learning, data indicating a result of determination of doneness or baking control for each layer of the batter estimated from an operator operation by manual control during baking on the Baumkuchen baking machine. The control unit may provide, to the server via the communication unit, the teaching data created by the learning unit or learning-enhanced model generated through learning using the teaching data.

This allows the Baumkuchen baking system to learn the operator's way to operate the Baumkuchen baking machine for determination and control during baking of a Baumkuchen, and thus generate a learning-enhanced model. The generated learning-enhanced model is provided to the server. This allows the server to provide skills of the operator learned by the Baumkuchen baking system. For example, in an environment where a plurality of Baumkuchen baking systems can communicate with the server, chef skills learned by one Baumkuchen baking system can be implemented by another Baumkuchen baking system.

The control unit may provide, to the server via the communication unit, the learning-enhanced model generated by the learning unit in association with chef data indicating, as the chef, the operator who performed the operation that served as a basis for the result of determination in the teaching data used during learning for the learning-enhanced model. This allows the server to store, on the storage unit, the learning-enhanced model and the chef data in association with each other.

The learning unit may create, for each of a plurality of Baumkuchen, teaching data for baking of the Baumkuchen. In such implementations, the control unit may provide, to the server, that one of a plurality of teaching data sets for Baumkuchen which has been designated by the operator, or the learning-enhanced model generated through learning using the designated teaching data. This allows the operator to designate, as data to be provided to the server, the teaching data for Baumkuchen that has resulted in a good doneness after baking or a learning-enhanced model based thereon, for example. Further, the control unit may provide, to the server, teaching data for a plurality of Baumkuchen or a learning-enhanced model generated through learning using teaching data for the plurality of Baumkuchen, where the plurality is equal to or larger than a predetermined number.

The control unit may provide, to the server via the communication unit, the learning-enhanced model generated by the learning unit in association with batter recipe data indicating a combination of ingredients of Baumkuchen batter and a preparation procedure used for learning for the learning-enhanced model. This allows the server to store on its storage unit the learning-enhanced model and batter recipe data in association with each other. Further, the control unit may provide, to the server, the chef data and the batter recipe data in association with the learning-enhanced model.

### (Arrangement 6)

Starting from any one of Arrangements 1 to 6 above, the control unit may acquire, from the server, batter recipe data indicating a combination of batter ingredients and a batter preparation procedure associated with the learning-enhanced model provided by the server, and provide, as output, the batter recipe data to an operator of the Baumkuchen baking machine. This allows the operator of the Baumkuchen baking machine to prepare batter suitable for baking using the learning-enhanced model. This enables offering Baumkuchen of higher quality. In some implementations, the storage unit accessible to the server may store, for each learning-enhanced model, batter recipe data in association with that particular model. In such implementations, for each learning-enhanced model, batter recipe data indicating a combination of batter ingredients and a preparation procedure during creation of teaching data used for learning for that particular learning-enhanced model is stored in association with that model.

Starting from Arrangement 2 above, the control unit may acquire batter recipe data associated with the learning-enhanced model associated with chef data indicating the chef designated by the operator. This enables baking Baumkuchen with a quality even closer to that of a Baumkuchen made by the designated chef.

The batter recipe data may contain, as the data indicating a combination of batter ingredients, data indicating batter ingredients (i.e., contents) or the amounts of the ingredients. Further, the batter recipe data may contain, as the data indicating the batter preparation procedure, data indicating an order of feeding of ingredients and conditions in which the ingredients being fed are mixed (i.e., mixing conditions). Further, the batter recipe data may contain, as the data indicating the batter preparation procedure, data indicating the temperatures of ingredients when fed or data indicating physical properties, such as specific weight, of the batter.

Starting from any one of Arrangements 1 to 6 above, the Baumkuchen baking machine may further include a mixer adapted to mix ingredients of the batter. The automatic control unit may acquire, from the server, batter recipe data indicating a combination of batter ingredients and a preparation procedure associated with the learning-enhanced model provided by the server, and control the mixer based on the batter recipe data. This enables automation of at least part of the preparation procedure indicated in the batter recipe data. For example, the control unit may control the mixing by the mixer in accordance with the mixing conditions for the various ingredients indicated in the batter recipe data.

Starting from any one of Arrangements 1 to 6 above, the Baumkuchen baking machine may further include an illuminator adapted to illuminate a region included in a coverage of the camera. That is, the Baumkuchen baking machine may include a dedicated illuminator. This stabilizes the photographing environment for the camera with respect to batter being baked. This improves the determination precision of the automatic control unit. The illuminator is supported on the Baumkuchen baking machine at a location that enables the illuminator to illuminate the coverage of the camera, for example. Although not limiting, the light source of the illuminator may have a brightness of 3000 lm or higher, and may be constructed to be positionable within 1.5 m from the batter of the Baumkuchen being baked, for example. The learning-enhanced model provided by the server may be a learning-enhanced model obtained through learning using, as the teaching data, an image of the outer peripheral surface of the batter of the Baumkuchen captured under the same illumination conditions as the illumination conditions of the illuminator, and the relevant doneness determination or baking control.

### (Arrangement 7)

A Baumkuchen baking assist system according to an embodiment of the present invention is capable of accessing a storage unit adapted to store a learning-enhanced model obtained by learning a doneness determination or baking control based on an image of an outer peripheral surface of layered Baumkuchen batter on a roller being baked. The Baumkuchen baking assist system includes: a model provision unit adapted to provide the learning-enhanced model to a Baumkuchen baking system including a Baumkuchen baking machine, a camera and a control unit; and a baking record reception unit adapted to receive, from the Baumkuchen baking system, record data indicating a past record of baking of a Baumkuchen through automatic control of the Baumkuchen baking machine based on an image captured by the camera using the learning-enhanced model provided by the model provision unit.

In Arrangement 7 above, the Baumkuchen baking system may use a learning-enhanced model that has been provided to determine doneness or baking control for each Baumkuchen batter layer based on the image captured by the camera to achieve automatic control of baking of each layer. The Baumkuchen baking system is capable of producing high-quality Baumkuchen. Further, record data indicating a past record of baking using a learning-enhanced model is provided to the Baumkuchen baking assist system. This allows the Baumkuchen baking assist system to be informed of the use conditions of the learning-enhanced model. This makes it easier for both the party providing the learning-enhanced model and the party using it to receive the appropriate profits. This facilitates the business of offering Baumkuchen.

### (Arrangement 8)

The storage unit may store a plurality of learning-enhanced models. The storage unit may store, in association with each of the plurality of learning-enhanced models, chef data indicating a pastry chef who has contributed to creation of teaching data used for learning of that learning-enhanced model. The model provision unit is capable of providing, to the Baumkuchen baking system, a learning-enhanced model associated with chef data indicating a pastry chef input into the Baumkuchen baking system by an operator. This allows the Baumkuchen baking assist system to provide, to the Baumkuchen baking system, the learning-enhanced model associated with the designated chef.

### (Arrangement 9)

Starting from Arrangement 7 or 8 above, the Baumkuchen baking assist system may further include a model registration unit adapted to receive a learning-enhanced model from the Baumkuchen baking system and store the model on the storage unit. The learning-enhanced model is a learning-enhanced model generated in the Baumkuchen baking system through learning using, as teaching data, a result of determination of doneness or baking control for each layer of the batter estimated from an operator operation by manual control during baking on the Baumkuchen baking machine and an image captured by the camera of an outer peripheral surface of Baumkuchen batter currently being baked by the manual control. This allows a learning-enhanced model learned with one Baumkuchen baking system to be used by another Baumkuchen baking system.

In Arrangement 9 above, the model registration unit may receive, from the Baumkuchen baking system, chef data indicating, as the pastry chef, the operator who performed operations that served as a basis for a result of determination for the teaching data used in learning for the learning-enhanced model in addition to the learning-enhanced model, and store, on the storage unit, the chef data in association with the learning-enhanced model.

### (Arrangement 10)

The Baumkuchen baking assist system of Arrangement 8 may further include an accounting unit adapted to use the record data received by the baking record reception unit to calculate a use fee for the learning-enhanced model used by the Baumkuchen baking system and a reward for the pastry chef indicated in the chef data associated with the learning-enhanced model. This enables accounting that promotes provision of a learning-enhanced model and contribution of a chef with respect to the learning-enhanced model.

A program according an embodiment of the present invention is a program adapted to cause a computer capable of communicating data with a server and controlling a Baumkuchen baking machine to perform a process. The server is capable of accessing a storage unit storing a learning-enhanced model obtained by learning a doneness determination or baking control based on an image of an outer peripheral surface of layered Baumkuchen batter on a roller being baked. The Baumkuchen baking machine includes an oven, a batter container, a roller capable of moving between a baking position for the oven and the batter container, and a camera adapted to photograph a portion of an outer peripheral surface of layered Baumkuchen batter on the roller. The program causes the computer to perform: a process for receiving, from an operator, an instruction for automatic control using the learning-enhanced model; and a process for determining doneness or baking control using the learning-enhanced model provided by the server based on the image, captured by the camera, of the outer peripheral surface of the Baumkuchen batter currently being baked at the baking position for the oven and using a result of determination to automatically control baking of each layer of the Baumkuchen batter.

A program according to an embodiment of the present invention is a program that causes a computer to perform a process, the computer being capable of communicating with a Baumkuchen baking system including a Baumkuchen baking machine, a camera and a control unit. The program is adapted to cause the computer to perform: a process for accessing a storage unit storing a learning-enhanced model obtained by learning a doneness determination or baking control based on an image of an outer peripheral surface of layered Baumkuchen batter on a roller being baked; a process for providing the learning-enhanced model to the Baumkuchen baking system; and a process for receiving, from the Baumkuchen baking system, record data indicating a past record of baking of a Baumkuchen by automatically controlling the Baumkuchen baking machine using the provided learning-enhanced model based on an image captured by the camera.

A manufacturing method according to an embodiment of the present invention is a method of manufacturing a Baumkuchen by a computer capable of communicating with a server controlling a Baumkuchen baking machine. The server is capable of accessing a storage unit storing a plurality of learning-enhanced models obtained by learning a doneness determination or baking control based on an image of an outer peripheral surface of layered Baumkuchen batter on a roller being baked. The Baumkuchen baking machine includes an oven, a batter container, a roller capable of moving between a baking position for the oven and the batter container, and a camera adapted to photograph a portion of the outer peripheral surface of layered Baumkuchen batter on the roller. The manufacturing method includes: a step in which the computer receives, from an operator, an instruction for automatic control using the learning-enhanced model; and a step in which the computer determines doneness or baking control using the learning-enhanced model provided by the server based on an image, captured by the camera, of an outer peripheral surface of Baumkuchen batter currently being baked at the baking position for the oven and uses a result of determination to automatically control baking of each layer of the Baumkuchen batter.

### [Embodiments]

Now, embodiments will be described with reference to the drawings. The same and corresponding components in the drawings are labeled with the same reference characters, and will not be described repeatedly. For ease of explanation, components in the drawings referred to below may be simplified or shown schematically, or some components may be omitted.

### (Exemplary Overall Configuration)

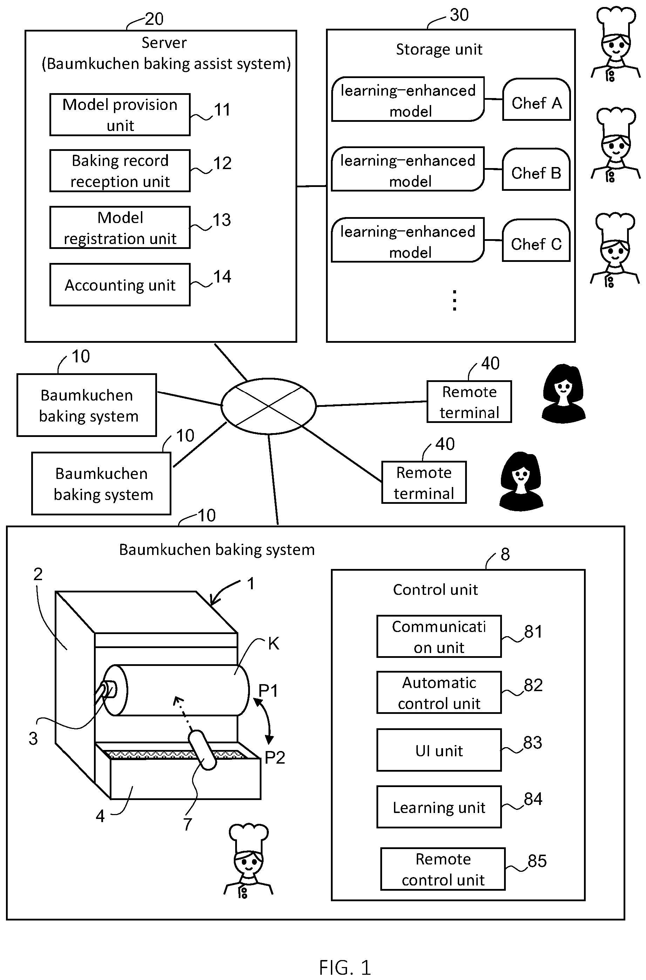

FIG. 1 illustrates an exemplary configuration of an entire system including Baumkuchen baking systems and a Baumkuchen baking assist system according to an embodiment. In the implementation shown in FIG. 1, Baumkuchen baking systems 10, a Baumkuchen baking assist system 20 and remote terminals 40 are connected over a network so as to be capable of communicating data with one another.

The Baumkuchen baking assist system 20 is constituted by a server. The Baumkuchen baking assist system 20 will hereinafter sometimes referred to as server 20. The Baumkuchen baking assist system 20 is capable of accessing a storage unit 30. The storage unit 30 stores a plurality of learning-enhanced models in association with baking conditions (by way of example, chef data).

A Baumkuchen baking system 10 includes a Baumkuchen baking machine 1 and a control unit 8. The control unit 8 is constituted by a computer. The control unit 8 uses a learning-enhanced model provided by the server 20 to automatically control Baumkuchen baking by the Baumkuchen baking machine 1. Further, the Baumkuchen baking system 10 learns operations of the Baumkuchen baking machine that are manually controlled by an operator to generate a learning-enhanced model. Furthermore, the Baumkuchen baking system 10 receives an operation instruction from a remote terminal and controls the Baumkuchen baking machine 1 to bake a Baumkuchen.

The Baumkuchen baking machine 1 includes an oven 2, a batter container 4, a roller 3 capable of moving between a baking position P1 for the oven 2 and the batter container 4, and a camera 7. The camera 7 photographs a portion of the outer peripheral surface of layered Baumkuchen batter on the roller 3 at the baking position P1. The control unit 8 controls: a machine operation in which the roller 3 having layered Baumkuchen batter K thereon is moved from a batter application position P2, at which batter in the batter container 4 is applied to the batter on the roller 3, to the baking position P1 for the oven 2; and a machine operation in which the roller is moved from the baking position P1 to the batter application position P2.

The Baumkuchen baking system 10 is installed in facilities such as confectioneries, bakeries, or confectionery factories. A plurality of Baumkuchen baking systems 10 installed in a plurality of facilities may be connected to the server 20 over the network. A remote terminal 40 is a terminal handled by a remote operator, such as a pastry chef or a consumer, at a location remote from the Baumkuchen baking machine 1. The remote terminal 40 is constituted by a computer including a display device, an input device (e.g., a touch screen, a key board, buttons, and a mouse), and communication functionality.

A learning-enhanced model is a learning-enhanced model obtained through learning of baking control based on an image of the outer peripheral surface of layered Baumkuchen batter on the roller being baked. Teaching data used for learning for a learning-enhanced model may contain, for example, an image of the outer peripheral surface of Baumkuchen batter during baking of a Baumkuchen through a chef's operation of a baking machine identical with the Baumkuchen baking machine 1, and a determination of doneness or baking control based on the chef's operation. The learning-enhanced model may be, for example, a data set for performing a process in which an image of the outer peripheral surface of layered Baumkuchen batter on the roller being baked is received as input and a value indicating the determination of doneness or baking control is output.

The learning-enhanced model may be a model that receives, as input, an image of the outer peripheral surface of the Baumkuchen batter and, in addition, other data obtained through detection during baking of the Baumkuchen. That is, the learning-enhanced model may be a model obtained through learning of an image of the outer peripheral surface of the batter and a doneness determination or baking control based on data obtained through detection during baking. For example, the learning-enhanced model may be a model that receives, as output, an image and, in addition, at least one of the rotational speed of the layered Baumkuchen batter on the roller, the baking time for the outer peripheral surface of the Baumkuchen batter, or the temperature of the oven. The temperature of the oven that is input may be, for example, at least one of the temperature in the oven and the surface temperature of the batter.

The server 20 holds a plurality of learning-enhanced models. Each of the learning-enhanced models is associated with baking conditions (by way of example, chef data). The chef data is data indicating the pastry chef who has contributed to creation of the teaching data used for learning for the relevant learning-enhanced model. The chef who has contributed to creating teaching data may be, for example, a chef who performed operations that served as a basis for a value indicating doneness or baking control contained in the teaching data. Baking conditions are not limited to chef data. In other implementations, a learning-enhanced model may not be stored in association with baking conditions.

The server 20 provides a learning-enhanced model to the Baumkuchen baking system 10. The server 20 provides, for example, a learning-enhanced model associated with a baking condition designated by the Baumkuchen baking system 10. Further, the server 20 acquires, from the Baumkuchen baking system 10, record data indicating past records of baking actually performed using the provided learning-enhanced model. The record data may be stored on the storage unit 30, for example. The server 20 may use the record data to calculate various fees. The server 20 is a system that makes learning-enhanced models available to the Baumkuchen baking system 10 over a cloud.

### (Exemplary Configuration of Baumkuchen Baking System 10)

In the implementation shown in FIG. 1, the control unit 8 of the Baumkuchen baking system 10 includes a communication unit 81, an automatic control unit 82, a user interface unit 83 (hereinafter referred to as "UI unit 83"), a learning unit 84, and a remote control unit 85. The communication unit 81 is a functional block that communicates data with the outside over the network. The communication unit 81 is constituted by a communication module included in the computer constituting the control unit 8, for example.

The UI unit 83 represents a user interface for data input by the operator and data output for the operator. The UI unit 83 may be constituted by an input/output interface included in the computer constituting the control unit 8, for example. The UI unit 83 controls information to be provided to the operator as output, and information received as input from the operator. The UI unit 83 receives, from the operator, a baking condition for the Baumkuchen to be produced. As an example of a baking condition, the UI unit 83 receives a designation of a pastry chef.

The automatic control unit 82 uses a learning-enhanced model provided by the server 20 to automatically control baking of each Baumkuchen batter layer based on an image of the outer peripheral surface of the Baumkuchen batter K currently being baked captured by the camera 7. The automatic control unit 82 uses a learning-enhanced model associated with the baking condition received via the UI unit 83 for automatic control. By way of example, the automatic control unit 82 uses a learning-enhanced model from the chef designated by the operator for automatic control.

The learning unit 84 generates a learning-enhanced model by learning a doneness determination or baking control based on an operator operation on the Baumkuchen baking machine 1 and an image from the camera 7 during that operator operation. For example, the learning unit 84 estimates the result of doneness determination or baking control from the operator operation by manual control on the Baumkuchen baking machine 1 during baking. The learning unit 84 can generate a learning-enhanced model through learning using, as teaching data, the estimated result of determination or baking control and the image of the outer peripheral surface of the batter at the baking position for the oven 2 captured in a period including the point of time of the operator operation that served as a basis for the estimation.

The remote control unit 85 enables controlling the baking operation of the Baumkuchen baking machine 1 from a remote terminal 40 in real time. The remote control unit 85 transmits, to the remote terminal 40 in real time, images of the outer peripheral surface of the Baumkuchen batter currently being baked captured by the camera 7. That is, the remote control unit 85 relays images from the camera 7 during baking to the remote terminal 40. The remote control unit 85 controls baking of each Baumkuchen batter layer in accordance with operation instructions received from the remote terminal 40 during transmission of the images.

For example, the remote control unit 85 may receive, from the remote terminal 40, an operation instruction to terminate baking during transmission of images of the outer peripheral surface of the Baumkuchen batter currently being baked in the oven 2. The operation instruction to terminate baking may be, for example, an operation instruction to remove the roller 3 from the oven 2. This allows the operator to control the baking time for each layer via the remote terminal 40.

The remote control unit 85 may set, for each Baumkuchen batter layer, a baking-time range within which an operation instruction from the remote terminal 40 can control baking time. For example, a lower limit and an upper limit for baking time may be set. In such implementations, a lower limit may be a period of time indispensable for baking one batter layer. An upper limit may be such a period of time that baking any longer would result in overbaking.

The baking-time range that permits control may be, for example, a predetermined period of time. Alternatively, a baking-time range that permits control may be decided upon depending on the baking condition. The baking condition may be, for example, at least one of the temperature of the oven, the rotational speed of the batter, the combination of batter ingredients, the physical properties of the batter, the size of the spit, or the number of batter layers. Alternatively, a baking-time range that permits control may be decided upon based on the doneness determined based on an image from the camera 7 using the learning-enhanced model.

The remote control unit 85 may use the learning-enhanced model provided by the server 20 to determine doneness or baking control based on an image of the outer peripheral surface of the Baumkuchen batter actually being baked captured by the camera 7, and provide the result of determination, together with the image, to the remote terminal 40 in real time. For example, the unit may provide, to the remote terminal 40, information indicating the doneness determined using the learning-enhanced model, or the point of time at which baking is to be terminated, together with the image.

The Baumkuchen baking machine 1 may include at least one of a rotation sensor that detects rotation of the roller 3 about its axis, a temperature sensor that detects the temperature of the oven 2, or a timer that measures baking time.

The temperature sensor may be, for example, a thermometer that measures the temperature of air in the oven 2, a radiation thermometer that measures the temperature of the outer peripheral surface of the Baumkuchen, or may detect a temperature from output values of temperature, electric current and/or voltage, for example, from the heater of the oven 2. By way of example, the temperature sensor may acquire both the temperature of air in the oven 2 and the temperature of the outer peripheral surface of the Baumkuchen batter.

For example, the rotation sensor may include a detector that optically, magnetically or mechanically detects movement of an detected element rotating together with the shaft of the roller 3. Alternatively, the rotation sensor may be configured to detect rotation of the roller 3 from output values from a motor that controls the rotation of the roller 3.

The timer may be part of the control unit 8, for example. The timer may measure the baking time by, for example, measuring the elapsed time from the positioning of the roller 3 at the baking position.

The camera 7 of the Baumkuchen baking machine 1 may be positioned so as to be able to photograph a portion of the outer peripheral surface of the layered batter K on the roller 3 that extends part of its axial dimension. This will enable obtaining images suitable for determining the doneness of the outer peripheral surface of the rotating Baumkuchen batter by means of a simple arrangement.

The camera 7 may be positioned, for example, so as to capture an image in which the entire diameter of the layered batter K on the roller 3 at the baking position is recognizable. The control unit 8 may acquire an image of a portion of the batter covering part of the diameter, cut out from the image captured by the camera 7. In such implementations, the control unit 8 performs the automatic control process or the learning process using an image of a portion of the batter K covering part of the diameter. Since an image of a portion of the batter covering part of the diameter is used, that portion of an entire-diameter image of the batter which best shows doneness in terms of color can be used for the automatic control or learning process.

The camera 7 may be a single camera, or may be constituted by a plurality of cameras. The optical axis of the camera 7 may be positioned to cross the axial direction of the roller 3. The camera 7 may be positioned, for example, outside the oven 2 so as to photograph the outer peripheral surface of the batter in the oven 2 through a window in the oven 2. Further, the camera 7 and roller 3 may be configured such that the position of the optical axis of the camera 7 relative to the roller 3 at the baking position P1 for the oven 2 is fixed. This enables fixing the conditions in which the camera 7 photographs the batter at the baking position. In addition to the position of the optical axis of the camera 7 relative to the roller 3 at the baking position for the oven 2, the relative position of the heater of the oven 2 may also be fixed. Furthermore, the illuminator 72 is supported such that it can be positioned to be capable of illuminating the coverage of the camera 7. For example, the illuminator 72 may be positioned outside the oven 2 so as to illuminate the outer peripheral surface of the batter within the oven 2 through the window of the oven 2.

The control unit 8 includes a processor and memory. The control unit 8 may be constituted by two or more computers. The process by the control unit 8 for controlling the Baumkuchen baking machine is implemented by the processor performing a predetermined program. A program for causing the control unit 8 to perform the process and a non-transitory storage medium storing such a program are encompassed by the embodiments of the present invention. The control unit 8 may be incorporated in the Baumkuchen baking machine 1, or may be communicably connected over a network to baking machine portions of the Baumkuchen baking machine 1 including the oven 2, roller 3 and moving mechanism.

The control unit 8 is not limited to the exemplary configuration of FIG. 1. For example, one or two of the automatic control unit 82, learning unit 84 and remote control unit 85 may be omitted. For example, the control unit 8 may include a communication unit 81, a UI unit 83, and a remote control unit 85.

### (Exemplary Configuration of Control Unit)

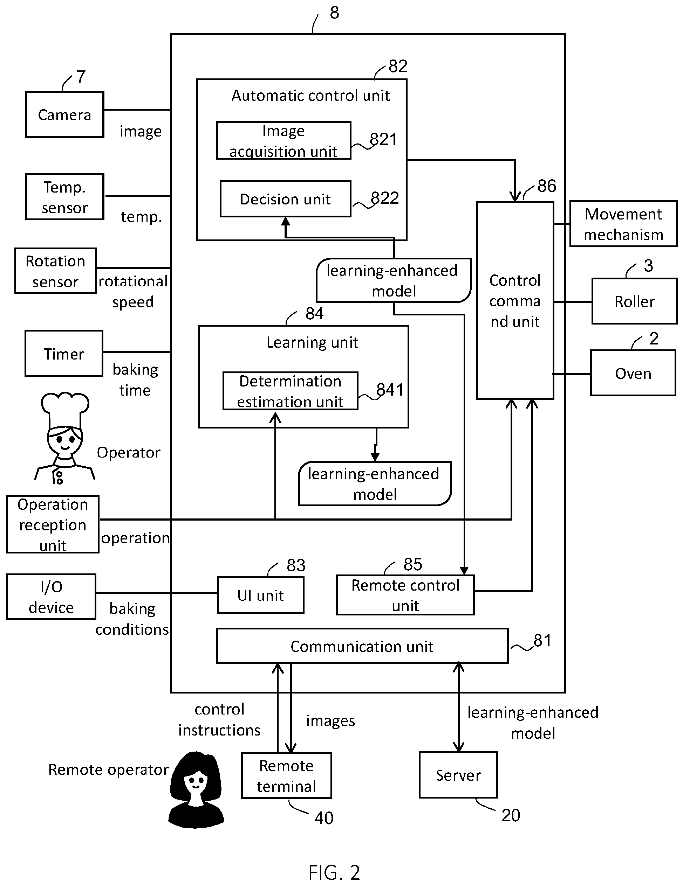

FIG. 2 illustrates an exemplary configuration of the control unit 8 of the Baumkuchen baking system 10. In the implementation shown in FIG. 2, the Baumkuchen baking machine 1 includes a rotation sensor, a temperature sensor, and a timer. The temperature sensor measures the temperature of the oven 2.

The control unit 8, when acquiring an image captured by the camera 7, may further acquire at least one of the rotational speed of the layered Baumkuchen batter K on the roller 3, the temperature of the oven 2, or the baking time for the outer peripheral surface of the Baumkuchen batter K. That is, the control unit 8 may be configured to acquire at least one of the rotational speed detected by the rotation sensor, the temperature detected by the temperature sensor, or the baking time measured by the timer.

The rotational speed may be, for example, the rotational speed of the roller 3, or the speed of circumferential movement of the outer peripheral surface of the batter. The temperature of the oven 2 may be, for example, the surface temperature of the outer peripheral surface of the batter, the temperature of the air within the oven 2, or the temperature of the heat source of the oven 2. The baking time for the outer peripheral surface of the batter is the baking time for one batter layer. For example, the baking time may be the elapsed time from the point of time at which the roller moved from the batter application position to the baking position for the oven.

Further, the control unit 8 includes a control command unit 86 that sends commands to a movement mechanism, the roller 3, and the oven 2. The movement mechanism is a mechanism that moves the roller 3 between the baking position P1 for the oven 2 and the batter container 4. The movement mechanism may include, for example, a support member that rotatably supports the shaft of the roller, and an actuator that moves the shaft of the roller supported by the support member. The support member may be, for example, a movable arm, or a guide such as a rail. The actuator may be, for example, a motor, a hydraulic cylinder or any other power source. The control command unit 86 sends commands to the actuator. Controlling the drive of the actuator controls the movement of the roller 3 between the baking position P1 for the oven 2 and the batter application position P2.

The movable arm may be constructed such that one of its ends is rotatably supported on the Baumkuchen baking machine by means of a pivot shaft and the other end rotatably supports the rotating shaft of the roller. In such implementations, the actuator may include a motor for rotating the movable arm about the pivot shaft. For example, a pair of movable arms may be provided that rotatably support both ends, as determined along the axial direction, of the roller.

In the moving mechanism, the moving of the roller from the baking position for the oven to the batter application position may be the operation of moving at least one of the roller and batter container to bring them closer to each other. For example, the roller may be moved closer to the batter container, or the batter container may be moved closer to the roller.

The control command unit 86 controls rotation of the roller 3. For example, the control command unit controls rotation of the roller 3 about its axis, and movement of the roller 3 in a direction perpendicular to its axis. The control command unit 86 may control the heater of the oven 2. That is, the control unit 8 may control the temperature of the oven 2.

The UI unit receives data input by the operator via an input/output device included in the Baumkuchen baking machine 1, and present information as output to the operator. The input/output device may include, for example, a touch screen, buttons, a lever, a key board, or a mouse.

In the implementation of FIG. 2, the control unit 8 is connected to an operator operation reception unit included in the Baumkuchen baking machine 1. The operator operation reception unit receives an operator operation on the Baumkuchen baking machine 1 from the operator. The operator operation reception unit may be composed of, for example, an operator operation panel and operator operation elements such as operator operation buttons. The operator operation reception unit is capable of receiving an operation by the operator relating to, for example, the operation of the roller 3 and the temperature of the oven 2. Examples of operator operations received by the operator operation reception unit from the operator relating to the operation of the roller 3 include an operator operation for moving the roller 3 to the batter application position, an operator operation for moving the roller 3 from the batter application position to the baking position for the oven 2 (i.e., operation for initiating baking), an operator operation for moving the roller 3 from the baking position to the batter application position (i.e., operation for terminating baking), and an operator operation for controlling the rotational speed of the roller 3. When baking occurs under manual control by the operator, the roller 3 is controlled in accordance with operator operations on the operator operation reception unit.

### <Exemplary Configuration of Automatic Control Unit>

In the implementation shown in FIG. 2, the automatic control unit 82 includes an image acquisition unit 821 and a decision unit 822. The image acquisition unit 821 acquires, from the camera 7, a group of images of the outer peripheral surface of the batter K rotating together with the rotating roller 3 at the baking position P1 for the oven 2, the group of images covering at least one entire turn. For example, the image acquisition unit 821 acquires, from the camera 7, a group of images of a portion of the outer peripheral surface of the batter captured at predetermined intervals. Each of the acquired images in the group may be an image of a portion of the batter covering part of the diameter, cut out from an image of the batter covering the entire diameter.

The decision unit 822 decides on a point of time at which the roller 3 is to be moved from the baking position for the oven 2 to the batter application position P2 based on the baked color of the outer peripheral surface of the batter K indicated in the group of images of the outer peripheral surface of the batter K at the baking position P1 for the oven 2, the group of images covering at least one entire turn. Thus, the baking time for one layer is controlled.

The decision unit 822 uses a learning-enhanced model provided by the server 20 to decide upon such a point of time. For example, the decision unit 822 uses a learning-enhanced model to perform a process in which an image of the outer peripheral surface of the batter is input and an evaluation value about doneness is output. For example, the decision unit 822 successively determines doneness for each of the images in the group and, when the doneness determined from an image satisfies a predetermined requirement, determines that the roller is now to be moved from the baking position to the batter application position.

The automatic control unit 82 decides on a learning-enhanced model depending on the baking condition received via the UI unit 83. The automatic control unit 82 decides to choose, as the model to be used for automatic control, that one of the learning-enhanced models available from the server 20 which is associated with the baking condition input by the operator. The automatic control unit 82 may download a plurality of learning-enhanced models from the server 20 in advance, or may download from the server 20 the learning-enhanced model decided upon depending on the baking condition.

For example, in implementations where the baking condition associated with the learning-enhanced model is chef data, the UI unit 83 may present, to the operator, pastry chefs to choose from and receive a chosen chef as input. In such implementations, the learning process is performed for each of the chefs in advance to generate a learning-enhanced model for that particular chef, and the resulting models are stored on the storage unit 30. Thus, learning-enhanced models are prepared that enable reproduction of a doneness determination or baking control that reflect each chef's originality.

The automatic control unit 82 may determine the doneness or baking control based on an image captured by the camera 7 and, in addition, at least one of the rotational speed of the batter K, the temperature of oven 2, or the baking time. Thus, using at least one of rotational speed, temperature or baking time enables determination taking account of the effects of at least one of rotational speed, temperature or baking time on the doneness. This enables controlling the time at which the roller is to be moved from the baking position to the batter application position to achieve a more appropriate doneness. In such implementations, the learning-enhanced model may be a learning-enhanced model obtained through learning of a doneness determination or baking control based on an image of the outer peripheral surface of the batter and, in addition, at least one of rotational speed, temperature or baking time.

The automatic control unit 82 may acquire at least one of the speed of circumferential movement of the outer peripheral surface of the layered Baumkuchen batter K on the roller 3, or the diameter of the outer periphery of the layered Baumkuchen batter K on the roller 3. The automatic control unit 82 may determine doneness or baking control based on the image captured by the camera 7 and, in addition, at least one of the acquired speed of movement or diameter. In such implementations, the learning-enhanced model may be a learning-enhanced model obtained through learning of a doneness determination or baking control based on an image of the outer peripheral surface of the batter and, in addition, at least one of speed of movement or diameter.

The greater the number of batter layers on the roller 3, the larger the diameter of the batter becomes. The larger the diameter of the batter K, the higher the speed of circumferential movement of the outer peripheral surface of the batter even if the rotational speed of the shaft of the roller 3 is the same. As the speed of circumferential movement of the outer peripheral surface of the batter or the diameter of the outer periphery of the batter is included in the input data for a learning-enhanced model and used for determination, a determination is possible taking account of differences in baking conditions due to the layering of the batter. This enables automatic control to achieve a more appropriate doneness for each layer.

The control unit 8 may calculate the speed of circumferential movement of the outer peripheral surface of the batter based on the diameter of the outer periphery of the layered batter on the roller 3 and the rotational speed of the roller. The diameter of the outer periphery of the batter may be obtained by, for example, obtaining an image of the layered batter on the roller 3 that covers the entire diameter, and measuring the diameter of the batter in that image.

The automatic control unit 82 is not limited to the configuration shown in FIG. 2. In FIG. 2, a learning-enhanced model is acquired from the server 20 via the communication unit 81 and used for the automatic control process. Alternatively, for example, the automatic control unit 82 may be configured to send an image from the camera 7 to the server 20 and the server 20 may use a learning-enhanced model to make a determination based on the image, before the automatic control unit receives the result of determination from the server 20.

### <Exemplary Configuration of Learning Unit>

In the implementation shown in FIG. 2, the learning unit 84 includes a determination estimation unit 841. The determination estimation unit 841 estimates the determination of doneness of the Baumkuchen batter or baking control by the operator based on an operator operation for baking by manual control on the Baumkuchen baking machine 1. The learning unit 84 creates, as teaching data, the estimated doneness determination or baking control by the operator and an image of the outer peripheral surface of the batter at the point of time at which an operator operation for baking by manual control occurs. The image to be used as teaching data may be, for example, a group of images of the outer peripheral surface of the batter K at the baking position P1 for the oven 2 captured during at least one turn in a period of time including the time of the operator operation by manual control.

The determination estimation unit 841 may, for example, estimate the determination of doneness by the operator based on whether there was an operation by the operator to move the roller 3 having layered Baumkuchen batter K thereon from the baking position P1 to the batter application position P2. An operation by the operator to move the roller 3 having layered Baumkuchen batter K from the baking position P1 to the batter application position P2 occurs when the operator has determined that the doneness of the batter is appropriate. As such, an operation by the operator to move the roller may reflect a result of determination of doneness.

For example, the determination estimation unit 841 may estimate that the operator has determined that the doneness is insufficient, that is, baking is incomplete, if the operator did not perform an operation for moving the roller 3 with layered batter from the baking position P1 for the oven 2 to the batter application position P2 while the roller 3 is rotating at the baking position. In this case, the images of the outer peripheral surface of the batter captured by the camera 7 during rotation of the roller 3 are linked with the determination that baking is incomplete, and stored as teaching data.

In contrast, for example, the determination estimation unit 841 may estimate that the operator has determined that the doneness is good if the operator performed an operation for moving the roller 3 with layered batter from the baking position P1 of the oven 2 to the batter application position P2 while the roller 3 is rotating at the baking position. In this case, the images of the outer peripheral surface of the batter captured by the camera 7 during at least one turn of the roller 3 in a period of time including the time of the operator's operation are linked with the determination that baking has been properly completed, and stored as teaching data.

The learning unit 84 may generate a learning-enhanced model by further using at least one of the rotational speed of the layered Baumkuchen batter K on the roller 3, the temperature of the oven, or the baking time of the outer peripheral surface of the Baumkuchen batter in a period of time including the time of the operator's determination of doneness. The learning unit 84 may generate a learning-enhanced model by further using at least one of the speed of circumferential movement of the outer peripheral surface of the layered Baumkuchen batter K on the roller 3 or the diameter of the outer periphery of the Baumkuchen batter K in a period of time including the time of the operator's determination of doneness.

The learning unit 84 provides the generated learning-enhanced model to the server 20 via the communication unit 81. The learning unit 84 may provide, to the server 20, the generated learning-enhanced model in association with chef data. The chef data is data indicating, as a pastry chef, the operator who performed the operations that served as a basis for the teaching data during generation of the learning-enhanced model. The learning unit 84 may provide, to the server 20, other baking conditions other than the chef data in association with the learning-enhanced model. For example, baking conditions during Baumkuchen baking that served as a basis for creation of the teaching data for the learning-enhanced model may be provided to the server 20 in association with the learning-enhanced model.

In some implementations, the process for generating a learning-enhanced model through learning using teaching data may be performed outside the learning unit 84. The learning unit 84 may create teaching data and provide it to the server 20. In other implementations, the learning unit 84 may generate a learning-enhanced model by using teaching data to decide upon learning model parameters.

The learning unit 84 is capable of creating teaching data for a plurality of Baumkuchen. That is, the learning unit 84 may create teaching data for a plurality of rounds of Baumkuchen baking. The teaching data may contain, for one Baumkuchen (i.e., one round of Baumkuchen baking), data about images and operations for a plurality of layers. The UI unit 83 may receive, from the operator, a designation of a teaching data set to be used for learning from among the teaching data sets for a plurality of Baumkuchen. In such implementations, the teaching data for a Baumkuchen designated by the operator is provided to the server 20. Alternatively, the learning-enhanced model generated using the teaching data designated by the operator is provided to the server 20. The designation of teaching data received by the UI unit 83 may be a designation of teaching data about a Baumkuchen to be excluded from the use in learning.

### <Exemplary Configuration of Remote Control Unit>

The remote control unit 85 transmits, in real time, an image captured by the camera 7 to the remote terminal 40 via the communication unit 81. The remote control unit 85 may provide, in real time, an image captured by the camera 7 and, in addition, at least one of the rotational speed of the batter K detected by the rotation sensor, the baking time detected by the timer, or the temperature of the oven 2 to the remote terminal 40.

Further, control instructions received by the remote control unit 85 from the remote terminal 40 may include, in addition to control instructions regarding baking time, control instructions regarding rotation of the roller 3 or the temperature of the oven 2.

For example, during transmission of images of the outer peripheral surface of the Baumkuchen batter currently being baked in the oven 2, the remote control unit 85 may receive, from the remote terminal 40, an operation instruction to change the rotational speed of the roller 3. In such implementations, the remote control unit 85 may set a range of rotational speeds of the roller 3 within which rotational speed can be controlled by an operation instruction from the remote terminal 40.

The rotational-speed range that permits control may be a predetermined period of time, for example. Alternatively, a rotational-speed range that permits control may be decided upon depending on the baking condition. Alternatively, a rotational-speed range that permits control may be decided upon depending on the doneness determined based on images from the camera 7 using a learning-enhanced model.

The remote control unit 85 may use a learning-enhanced model provided from the server 20 to determine the suitable rotational speed based on images of the outer peripheral surface of the Baumkuchen batter being baked captured by the camera 7, and provide this speed to the remote terminal 40 in real time.

For example, during transmission of images of the outer peripheral surface of the Baumkuchen batter currently being baked in the oven 2, the remote control unit 85 may receive, from the remote terminal 40, an operation instruction to change the temperature of the oven 2. In such implementations, the remote control unit 85 may set a range of temperatures of the oven 2 within which temperature can be controlled by an operation instruction from the remote terminal 40.

The range of temperatures of the oven 2 that permits remote control may be a predetermined range, for example. Alternatively, a temperature range that permits control may be decided upon depending on the baking condition. Alternatively, a temperature range that permits control may be decided upon depending on the doneness determined based on images from the camera 7 using a learning-enhanced model.

The remote control unit 85 may use a learning-enhanced model provided from the server 20 to determine the suitable temperature of the oven 2 based on images of the outer peripheral surface of the Baumkuchen batter currently being baked captured by the camera 7, and provide this temperature to the remote terminal 40 in real time.

The remote control unit 85 may switch between permission and prohibition of control of the Baumkuchen baking machine 1 from the remote terminal 40 in response to a switch operation of the operator input into the UI unit 83 or operator operation reception unit. This avoids remote control unintended by the operator while, for example, the operator is still making preparations for baking with the Baumkuchen baking machine 1.

Further, the remote control unit 85 may output information indicating that the Baumkuchen baking machine 1 can be controlled from the remote terminal 40, by means of the display device of the input/output device or other notification devices included in the Baumkuchen baking machine (such as a speaker or a lamp), to be presented to the operator.

The remote control unit 85 may use a learning-enhanced model provided by the server 20 to automatically control baking of each Baumkuchen batter layer and, at the same time, transmit images of the outer peripheral surface of the batter to the remote terminal 40 in real time. In such implementations, too, the remote control unit 85 receives control instructions from the remote terminal 40. Thus, the remote control unit 85 may control baking of each batter layer both by automatic control using a learning-enhanced model and in response to control instructions from the remote terminal 40. In such implementations, too, a baking-time range within which time can be controlled by control instructions from the remote terminal 40 and/or ranges of other baking conditions may be set. A range that permits control may be decided upon in advance, or may be set based on detected images and/or other baking conditions. Further, a range that permits control may be decided upon based on a result of determination using a learning-enhanced model.

The remote control unit 85 may receive a designation of a chef from the remote terminal 40 and perform automatic control based on a result of determination using the learning-enhanced model associated with the designated chef, or perform real-time provision of such a result of determination to the remote terminal 40.

Further, in a variation, the remote terminal 40 may perform determination of doneness or baking control based on images using the learning-enhanced model provided by the server 20. In such implementations, the remote control unit 85 provides images from the camera 7 to the remote terminal 40 in real time. Based on the images provided in real time, the remote terminal 40 determines doneness or baking control using the learning-enhanced model provided by the server 20. The remote control unit 85 receives the result of determination by the remote terminal 40 using the learning-enhanced model, and uses this result of determination to automatically control baking of each Baumkuchen batter layer.

### (Exemplary Configuration of Server (Baumkuchen Baking Assist System))

In the implementation shown in FIG. 1, the server 20 includes a model provision unit 11, a baking record reception unit 12, a model registration unit 13, and an accounting unit 14. The model provision unit 11 provides a learning-enhanced model to the Baumkuchen baking system 10. Manners of such provision include, for example, providing a learning-enhanced model in response to a request from the Baumkuchen baking system 10 and, in addition, providing a batch of learning-enhanced models to the Baumkuchen baking system 10 in advance. Further, the learning-enhanced model provided may be teaching data. In such implementations, the control unit 8 of the Baumkuchen baking system 10 generates a learning-enhanced model based on the teaching data.

The baking record reception unit 12 receives record data from the Baumkuchen baking system 10. Record data is data indicating past records of use of a learning-enhanced model provided to the Baumkuchen baking system 10. That is, the record data indicates past records of use of a learning-enhanced model provided by the model provision unit 11 to automatically control the Baumkuchen baking machine 1 to actually bake Baumkuchen. The record data contains, for example, information specifying the learning-enhanced model used and information relating to Baumkuchen produced using the learning-enhanced model. The information relating to Baumkuchen produced may contain, for example, at least one of the amount of Baumkuchen produced, the type of Baumkuchen, the time of production, or a baking condition.

The accounting unit 14 uses the record data to calculate a fee relating to the use of a learning-enhanced model. By way of example, the unit calculates a use fee incurred by a business entity that manufactured Baumkuchen using the learning-enhanced model, and an amount of reward for the pastry chef who has contributed to generation of the used learning-enhanced model. The use fee for the learning-enhanced model may be, for example, a fee depending on the amount or type of Baumkuchen produced using the learning-enhanced model. Further, in implementations where a learning-enhanced model is associated with chef data, the use fee may be calculated based on a basis rate that has been set with respect to the chef in advance. The amount of reward for the chef may be an amount of money depending on the amount or type of Baumkuchen produced using the learning-enhanced model. Furthermore, the amount of reward may be calculated based on a basis rate that has been set in advance with respect to the chef.

The model registration unit 13 receives a learning-enhanced model generated by the Baumkuchen baking system 10 and stores it on the storage unit 30. The model registration unit 13 may receive, as a learning-enhanced model, teaching data created by the Baumkuchen baking system 10. In such implementations, the model registration unit 13 may store the teaching data as a learning-enhanced model on the storage unit 30, or may store a learning-enhanced model generated based on teaching data on the storage unit 30.

The model registration unit 13 may receive, from the Baumkuchen baking system 10, a learning-enhanced model and the associated chef data. In such implementations, the model registration unit 13 stores, on the storage unit 30, the received learning-enhanced model and chef data in association with each other. Thus, a learning-enhanced model for each chef is prepared.

The server 20 is constituted by one or more computers. The various functions of the model provision unit 11, baking record reception unit 12, model registration unit 13 and accounting unit 14 may be implemented by the processor(s) of the computer(s) performing a predetermined program. A program for causing the server 20 to perform the process and a non-transitory storage medium storing such a program are encompassed by the embodiments of the present invention. In some implementations, the server 20 may be constituted by a plurality of computers interconnected over a network. The storage unit 30 is constituted by a storage device accessible to the computer(s) constituting the server 20.

### (Exemplary Automatic Control Using Learning-Enhanced Model)

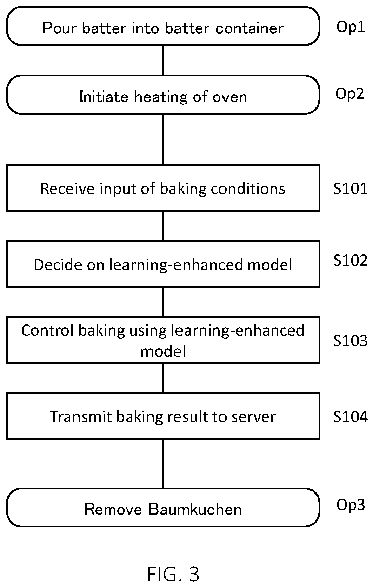

FIG. 3 is a flow chart showing an exemplary process by the Baumkuchen baking system 10 for baking a Baumkuchen by automatic control using a learning-enhanced model provided by the server.

In the implementation shown in FIG. 3, in a preparation stage for baking, an operator pours Baumkuchen batter into the batter container 4 (Op1). The batter may be a batter with a predetermined composition (i.e., ingredients). The batter composition (i.e., combination of ingredients) poured into the batter container 4 may be identical with the batter composition (i.e., combination of ingredients) employed in baking Baumkuchen for generating the learning-enhanced model to be provided from the server 20. This further improves the quality of Baumkuchen baked by automatic control using the learning-enhanced model. The operator turns on a switch on the heater of the oven 2 to initiate heating (Op2).

The UI unit 83 receives input of baking conditions from the operator (S101). Examples of baking conditions received by the UI unit 83 as input include the type of batter, the size of the roller 3 (i.e., spit), the number of batter layers to be baked, and the designation of a chef. The UI unit 83 presents, to the operator, the chefs representing chef data sets stored on the storage unit 30 in association with a plurality of learning-enhanced models, and receives a choice. The operator may select their choice from among the plurality of chefs having learning-enhanced models.

The automatic control unit 82 determines the learning-enhanced model associated with the baking conditions input by the operator at step S101 (S102). The automatic control unit 82 may acquire, for example, the learning-enhanced model on the storage unit 30 associated with the chef data indicating the chef designated by the operator.

The automatic control unit 82 uses the learning-enhanced model decided upon at step S102 to automatically control the Baumkuchen baking machine 1 to bake a Baumkuchen (S103). Exemplary details of the process of step S103 will be given further below.

Upon completion of baking of the Baumkuchen, the automatic control unit 82 transmits, to the server 20, record data indicating a record of baking of the Baumkuchen using the learning-enhanced model. The record data contains, for example, an identifier identifying a Baumkuchen baking system 10, the date of baking, the number or rounds, the type of batter, the size of the spit, the number of batter layers, and data identifying a learning-enhanced model.

Upon completion of baking, the operator removes the baked Baumkuchen, together with the roller 3, from the oven 2 (Op3). Thus, a Baumkuchen of high quality can be produced through automatically controlled baking using a learning-enhanced model.

### (Exemplary Remote Control)

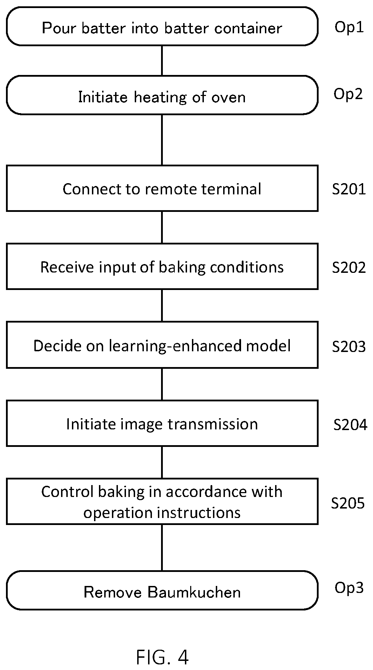

FIG. 4 is a flow chart showing an exemplary process by the Baumkuchen baking system 10 for baking a Baumkuchen by remote control. In the implementation shown in FIG. 4, in a preparation stage for baking, an operator at the location of installation of the Baumkuchen baking machine 1 (hereinafter referred to as "on-site operator") pours Baumkuchen batter into the batter container 4 (Op1). The on-site operator turns on a switch on the heater of the oven 2 to initiate heating (Op2).

The remote control unit 85 establishes connection with a remote terminal 40 such that the control unit 8 is able to communicate data with the remote terminal 40 (S201). The remote control unit 85 receives input of baking conditions from the remote terminal 40 (S201). A remote operator at a remote location inputs baking conditions via the remote terminal 40. Alternatively, input of baking conditions may be received by the UI unit 83 from the on-site operator. For example, the remote control unit 85 may receive a designation of a chef from the remote terminal 40, and the UI unit 83 may receive input of baking conditions from the on-site operator relating to the batter, the number of layers, and spit size.

The remote control unit 85 decides on a learning-enhanced model to be used for remote control based on the baking conditions input at step S202 (S203). For example, the unit decides to treat, as the learning-enhanced model to be used for remote control, the learning-enhanced model associated with the chef designated by the remote operator via the remote terminal 40 at step S202. The remote control unit 85 acquires the learning-enhanced model decided upon from the server 20 and makes it available in the control unit 8.

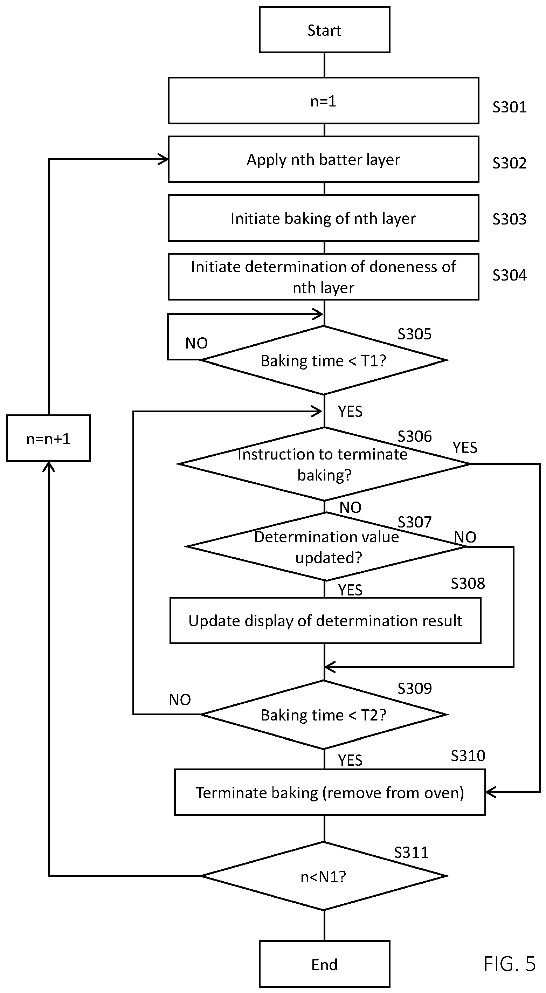

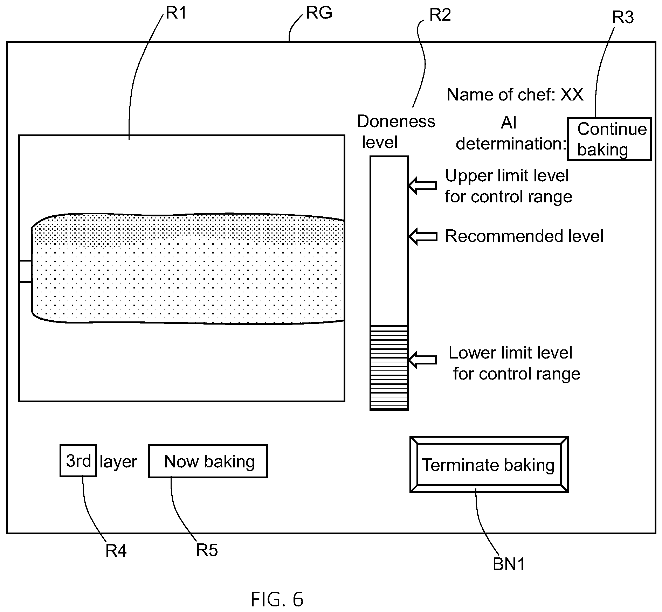

The remote control unit 85 initiates real-time transmission of images from the camera 7 (S204). The remote control unit 85 performs a baking control process in accordance with control instructions from the remote terminal 40 (S205). FIG. 5 is a flow chart illustrating an exemplary control process at step S205. FIG. 6 illustrates an example of an image displayed on the remote terminal 40 in the process of step S205.

In the implementation shown in FIG. 5, the remote control unit 85 initializes a layer counter, *n* (i.e., *n=1*) (S301). The remote control unit 85 applies an nth batter layer to the roller 3. The remote control unit 85 instructs the control command unit 86 to perform the application operation. The control command unit 86 moves the roller 3 to the batter application position P2 and rotates the roller 3.

After application of the nth batter layer, the remote control unit 85 initiates baking of the nth batter layer (S303). The remote control unit 85 instructs the control command unit 86 to perform the baking initiation operation. The control command unit 86 moves the roller 3 from the batter application position P2 to the baking position P1 and rotates the roller 3.

The remote control unit 85 initiates determination of the doneness of the nth layer using the learning-enhanced model (S304). The remote control unit 85 uses the learning-enhanced model to calculate a determination value for doneness based on images of the outer peripheral surface of the batter currently being baked captured by the camera 7. A plurality of images are captured by the camera 7 during one turn of the roller 3 at the baking position. The remote control unit 85 calculates a determination value for a plurality of images. For example, the unit may calculate a determination value for each of the plurality of images.

In the implementation shown in FIG. 6, the screen RG displayed on the remote terminal 40 displays a current image from the camera 7, R1, a current doneness level R2, a result of determination of doneness using a learning-enhanced model, R3 (including the name of the chef who has contributed to generation of the learning-enhanced model), a current batter layer R4, an operation state (i.e., during baking or during application of batter) R5, and a button BN1 through which an instruction to terminate baking is given. The remote control unit 85 provides these pieces of current information to the remote terminal 40 in real time for display. The display on the screen RG on the remote terminal 40 is not limited to these items. For example, the rotational speed of the roller (i.e., spit), temperature (i.e., at least one of the temperature in the furnace and the temperature of the batter surface), or the baking time for the current layer (elapsed time from initiation of baking) may be displayed on the screen RG.

The current doneness level may be determined, for example, based on the elapsed time from initiation of baking, i.e., baking time measured by the timer. Alternatively, the current doneness level may be determined based on the result of determination of doneness based on the current image using the learning-enhanced model. The determination of doneness using the learning-enhanced model may be based on an image and, in addition, at least one of rotational speed, temperature or baking time.

In the implementation shown in FIG. 6, the levels of upper and lower limits for the range permitting control are indicated by arrows. Levels of the upper and lower limits for the range permitting control may be decided upon, for example, depending on predetermined upper and lower limits for elapsed time. Alternatively, a level or levels of at least one of the upper and lower limits may be decided upon based on the current image. This decision may be based on an image and, in addition, rotational speed, temperature or baking time. The decision may use a result of determination using the learning-enhanced model. By way of example, an estimated time until the batter is burned may be calculated from the result of determination of doneness based on the image and temperature, and a level of the upper limit may be decided upon based on the estimated time.

In the implementation shown in FIG. 6, a recommended level of doneness is indicated by an arrow. A recommended level may be decided upon using the result of determination based on an image using the learning-enhanced model. For example, the remaining baking time with respect to the current image may be calculated using a learning-enhanced model that receives the image as input and outputs the remaining baking time. A recommended level of doneness may be decided upon based on the remaining baking time.

At step S305 in FIG. 5, it is determined whether the current baking time, i.e., the elapsed time from initiation of baking, has reached the lower limit T1 for the pre-set range permitting control. After the baking time has reached the lower limit T1, the processes of steps S306 to S308 are performed. If an instruction to terminate baking is input via the remote terminal 40 (S306), the remote control unit 85 controls the relevant elements to terminate baking (S310). At step S310, the remote control unit 85 instructs the control command unit 86 to perform the baking termination operation. The control command unit 86 moves the roller 3 from the baking position P1 to the batter application position P2.

If, at step S307, there is no instruction to terminate baking and the determination value of doneness based on an image using the learning-enhanced model has been updated (YES at step S307), the display of the result of determination by the remote terminal 40 is updated. The result of determination displayed may be, for example, information indicating preferred control based on doneness, such as continuation of baking or termination of baking, or information indicating the level of doneness. An exemplary calculation of a determination value will be given further below.

If there is still no instruction to terminate baking (NO at step S306) but the baking time has exceeded the upper limit T2 for the range permitting control (YES at step S309), the remote control unit 85 controls the relevant elements to terminate baking (S310). This avoids the baking time for one layer exceeding the upper limit T2 for the range permitting control.

When step S310 is performed and baking of one layer is terminated, it is determined whether the current number of layers, *n,* has reached a target number of layer *N1* (S311) and if *n<N1, 1* is added to *n* and the processes of steps S302 to S311 are repeated. Thus, the processes of steps S302 to S310 are repeated the number of times equal to the target number of layers *N1.* That is, the number of rounds of baking control equal to the target number of layers *N1* are performed. When the baking process for the number of target layers *N1* is completed, the on-site operator removes the roller 3 with the Baumkuchen from the oven 2 (Op3 in FIG. 5).

The remote control discussed above allows the remote operator to control baking time while observing the current baked color of the batter. Since lower and upper limits T1 and T2 are set for a range within which baking time can be controlled, significantly insufficient baking or overbaking for layers is avoided even if the remote operator is not sufficiently skillful, for example. Further, since a result of determination based on an image using a learning-enhanced model is displayed on the remote terminal in real time, the remote operator is informed, to some degree, of the appropriate timing of termination of baking.

The remote control is not limited to the above exemplary operations. The display of a result of determination based on an image using a learning-enhanced model or the setting of a range permitting control may be omitted. Further, the remote control is not limited to control of baking time. In lieu of, or in addition to, the control of baking time, at least one of the rotational speed of the roller 3 or the temperature of the oven 2 may be controlled via the remote terminal 40.

### (Exemplary Operation of Server)

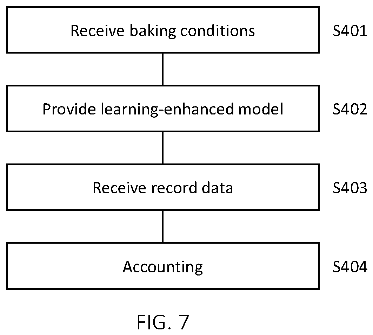

FIG. 7 illustrates an exemplary operation of the server 20. In the implementation shown in FIG. 7, the server 20 receives baking conditions from the Baumkuchen baking system 10 (S401). The baking conditions include, for example, the pastry chef designated by the operator at the Baumkuchen baking system 10. In addition to the chef, the baking conditions may include, for example, conditions relating to Baumkuchen batter or conditions relating to the size of the Baumkuchen. The conditions relating to batter include, for example, conditions regarding the composition (i.e., combination of ingredients) or physical properties of the batter. The conditions regarding the batter composition (i.e., combination of ingredients) include egg contained in the batter, the type or percentage of flour and butter, and toppings contained in the batter. The conditions regarding physical properties of the batter include batter temperature, the specific weight of the batter and the viscosity of the batter.

The server 20 provides, to the Baumkuchen baking system 10, a learning-enhanced model decided upon based on the baking conditions received at step S401 (S402). For example, in the implementation shown in FIG. 1, the storage unit 30 accessible to the server 20 stores a plurality of learning-enhanced models. Each of the learning-enhanced models is stored in association with chef data. In such implementations, the server 20 acquires, from the storage unit 30, the learning-enhanced model associated with the chef received at step S401 and provides it to the Baumkuchen baking system 10.

The server 20 receives the record data indicating past records of use of the learning-enhanced model provided at step S402 from the Baumkuchen baking system 10 that has provided that particular learning-enhanced model. The record data contains, for example, information specifying a learning-enhanced model and information indicating Baumkuchen that have been baked (i.e., produced) using that learning-enhanced model.

The server 20 uses the record data received at step S403 to calculate the fee or the amount of reward relating to the use of the provided learning-enhanced model (S404). For example, the server calculates the use fee for the provided learning-enhanced model and the amount of reward for the chef who has contributed to generation of the learning-enhanced model. The server 20 may provide the use fee for the learning-enhanced model and the amount of reward for the chef calculated at step S404 to an accounting system. The accounting system performs the process of charging the use fee for the learning-enhanced model and the process of paying the reward to the chef.

In the present embodiments, the server 20 holds learning-enhanced models. Alearning-enhanced model is machine learning-generated data about a chef's work to observe the baked color of Baumkuchen batter to determine doneness or control baking. Providing such learning-enhanced model to a Baumkuchen baking system including a camera and a control unit enables effective reproduction of skills of the chef by automatic control. That is, skills of a Baumkuchen chef are held in the server 20 in the form of a learning-enhanced model and thus available to the Baumkuchen baking system.

The server 20 holds a learning-enhanced model and manages its use. This allows proper protection and use of the learning-enhanced model. If skills of a Baumkuchen chef are available in the form of a learning-enhanced model, baking a high-quality Baumkuchen is possible in many facilities even without a chef. On the other hand, if skills of a chef become widely reproducible, this could depreciate his/her skills, which have been nurtured through long years of experience. In view of this, in the present embodiments, by way of example, the server 20 holds chef data and a learning-enhanced model in association with each other. In such implementations, the server 20 provides the learning-enhanced model of the designated chef such that its use conditions are known, which enables its management. Further, it enables determining the appropriate amount of reward for the chef who agreed to its use.

### (Exemplary Construction of Baumkuchen Baking Machine)

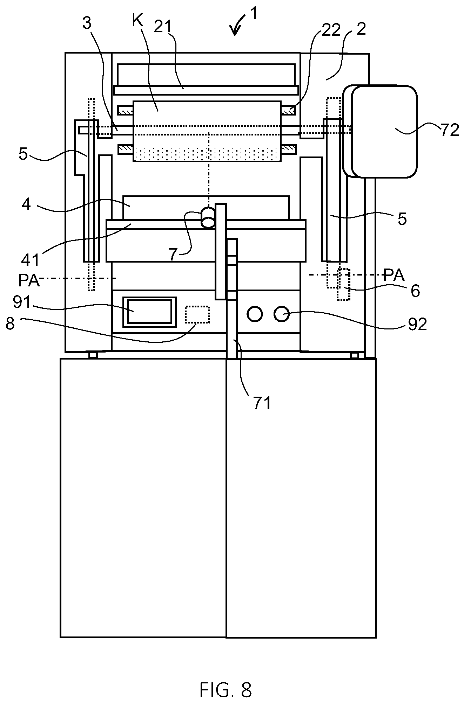

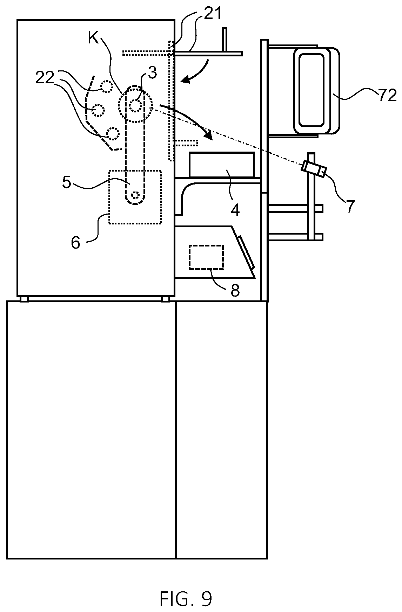

FIG. 8 is a front view of a Baumkuchen baking machine according to an embodiment. FIG. 9 is a side view of the Baumkuchen baking machine shown in FIG. 8. The Baumkuchen baking machine 1 shown in FIGS. 8 and 9 includes: an oven 2; a roller 3 on which Baumkuchen batter layers can be brushed on top of one another and that can rotate; a batter container 4 that contains Baumkuchen batter before baking; a moving mechanism (denoted by 5 and 6) that moves the roller 3 between a baking position for the oven and a batter application position; and a control unit 8 that controls the operation of the Baumkuchen baking machine.

The Baumkuchen baking machine 1 further includes a camera 7, as well as an illuminator 72 and various sensors (not shown in FIG. 8). The various sensors may include, for example, at least one of a temperature sensor that measures the temperature in the oven, a rotation sensor that detects the rotational speed of the layered Baumkuchen batter on the roller 3, and a timer that measures the baking time for the Baumkuchen batter.

The camera 7 is positioned so as to be able to photograph a portion of the outer peripheral surface of the layered Baumkuchen batter K on the roller 3 located at the baking position. The optical axis of the camera 7 crosses the outer peripheral surface of the Baumkuchen batter K. The camera 7 is supported by a support member 71. The support member 71 fixes the position of the optical axis of the camera 7 relative to the roller 3 at the baking position. The illuminator 72 illuminates a region included in the area covered by the camera 7. The illuminator 72 is supported by a support member.

The camera 7 captures a plurality of images of the outer peripheral surface covering at least one entire turn of the roller 3 having the layered Baumkuchen batter K thereon. For example, the camera 7 captures a video of the rotating Baumkuchen batter K. This produces a group of images of the outer peripheral surface of the Baumkuchen batter covering at least one entire turn.

The oven 2 is a heating furnace provided with a heater 22 located therein. The oven 2 includes a window 21 that can be opened and closed. The batter container 4 is located in front of the window 21. The batter container 4 is placed on a stand 41.

In the implementation shown in FIGS. 8 and 9, the layered Baumkuchen batter on the roller 3 is located at the baking position inside the oven 2. Both ends of the roller 3 are rotatably supported by a pair of arms 5. The roller 3 is rotated by a motor (not shown), for example. The control unit 8 controls the motor to control the rotation of the roller 3.

The pair of arms 5 are attached to the Baumkuchen baking machine 1 so as to be rotatable about a pivot shaft PA. An actuator 6 is connected to the arms 5. The actuator 6 drives the arms 5 to rotate. The actuator 6 is a motor, for example. The drive of the actuator 6 is controlled by the control unit 8. The control unit 8 controls the drive of the actuator 6 to control the rotation of the arms 5. By controlling the rotation of the arms 5, the position of the roller 3 is controlled. In the present implementation, the arms 5 and actuator 6 constitute the moving mechanism for the roller 3.

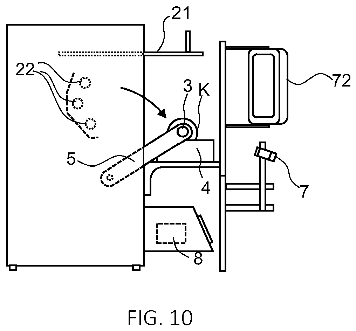

The control unit 8 controls the position of the roller 3 to move the roller 3 having the layered Baumkuchen batter K thereon between the batter application position and the baking position for the oven 2. The batter application position is the position at which batter in the batter container 4 is applied to batter on the roller 3. FIG. 10 shows the roller 3 as located at the batter application position. The batter application position is located above the batter container 4. As the roller 3 at the batter application position is rotated, the outer peripheral surface of the layered Baumkuchen batter K on the roller 3 receives further batter applied thereto. The detection of the position of the roller 3 by the control unit 8 is not limited to any particular configuration. For example, a position detection sensor may be provided on the Baumkuchen baking machine 1 for detecting the position of the roller 3 or arms 5. Alternatively, the control unit 8 may be configured to detect the position of the roller 3 based on the operation of the actuator 6.

The control unit 8 causes the roller 3 at the batter application position to rotate by at least one turn to apply one layer of Baumkuchen batter K to the roller 3. The control unit 8 causes the roller 3 having Baumkuchen batter K applied thereto to move from the batter application position to the baking position of the oven 2. This initiates the baking of the one layer of batter that has just been applied.

The control unit 8 acquires, from the camera 7, a group of images of the outer peripheral surface of the Baumkuchen batter rotating together with the roller 3 at the baking position for the oven 2, the group of images covering at least one entire turn. The control unit 8 determines the doneness of the outer peripheral surface of the Baumkuchen batter based on the baked color of the outer peripheral surface as indicated in the group of images captured by the camera 7. The control unit 8 decides on a point of time at which the roller 3 is to be moved from the baking position for the oven 2 to the batter application position based on the determined doneness. Thus, the roller 3 can be moved from the baking position for the oven 2 to the batter application position if the doneness is determined to be good. As the roller 3 is moved from the baking position for the oven 2 to the batter application position, baking is terminated. That is, the control unit 8 determines the doneness of one layer of Baumkuchen batter and controls the baking time for that one layer of batter so as to achieve the appropriate doneness.

The control unit 8 repeats a plurality of times the operations of controlling the position of the roller 3, applying Baumkuchen batter and baking it in the oven 2. Thus, a plurality of Baumkuchen batter layers are baked. For each layer to be baked, the baking time is controlled so as to achieve the appropriate doneness based on the images from the camera 7.

### (Exemplary Control Process)

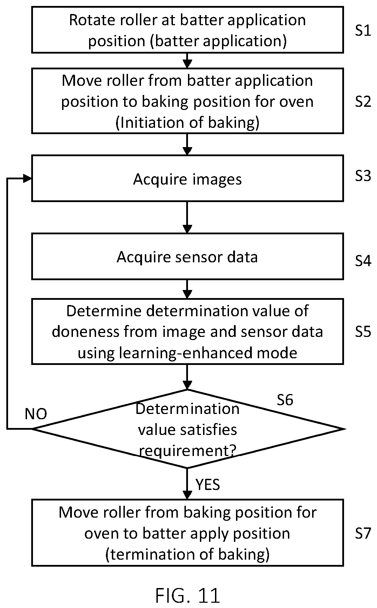

FIG. 11 is a flow chart illustrating an exemplary process for automatically controlling the Baumkuchen baking machine 1 performed by the control unit 8. In the exemplary implementation shown in FIG. 11, the control unit 8 causes the Baumkuchen baking machine 1 to perform the operation of applying one layer of batter to the roller 3 and baking it. The control unit 8 rotates the roller 3 at the batter application position, and applies one layer of batter to the outer peripheral surface of layered batter on the roller 3 (S1). Upon application, the control unit 8 moves the roller 3 from the batter application position to the baking position for the oven 2 (S2). Thus, baking is initiated. During the baking step, the roller 3 with layered Baumkuchen batter is located at the baking position for the oven 2 and is rotated.

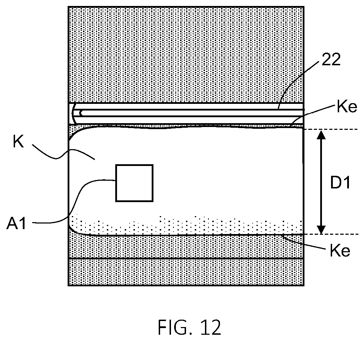

The control unit 8 acquires, from the camera 7, an image of the outer peripheral surface of the batter rotating together with the roller 3 (S3). FIG. 12 illustrates an example of an image captured by the camera 7. In the example shown in FIG. 12, the camera 7 captures an image of a region of the layered batter K on the roller 3, the region covering part of its axial dimension and its entire diameter. From this image, the control unit 8 cuts out an image of a central portion A1, as determined along the direction of the diameter, of the batter K and acquires it. That is, an image of a region of the batter that does not include the edges Ke, as determined along the direction of the diameter, of the batter K shown in the image is cut out. Thus, an image of that portion of the batter is obtained which best shows the doneness of the outer peripheral surface. For example, the color of portions of the batter that are close to the edges Ke, along the direction of the diameter, of the batter K shown in an image can easily be affected by light from the heater 22, and other factors. Cutting out an image of the central portion A1, as determined along the direction of the diameter, of the batter K enables acquiring an image of portions that are little affected by light of the heater 22 and other factors.

The control unit 8 acquires sensor data in synchronization with acquisition of the image (S4). The sensor data includes, for example, the surface temperature of the outer peripheral surface of the Baumkuchen detected by the temperature sensor (i.e., radiation thermometer). Further, the sensor data acquired includes the baking time measured by the timer. The baking time means the elapsed time from the initiation of baking.

The control unit 8 uses a learning-enhanced model provided by the server 20 to decide on a determination value about doneness based on the image acquired at step S3 and the sensor data acquired at step S4 (S5). That is, the control unit 8 determines the doneness based on the baked color of the batter's outer peripheral surface indicated in the image, as well as the surface temperature of the batter and the baking time. The learning-enhanced model may be data generated by deep learning using a neural network. That is, the control unit 8 may use an artificial intelligence technique using a neural network to determine the doneness from the image and sensor data.

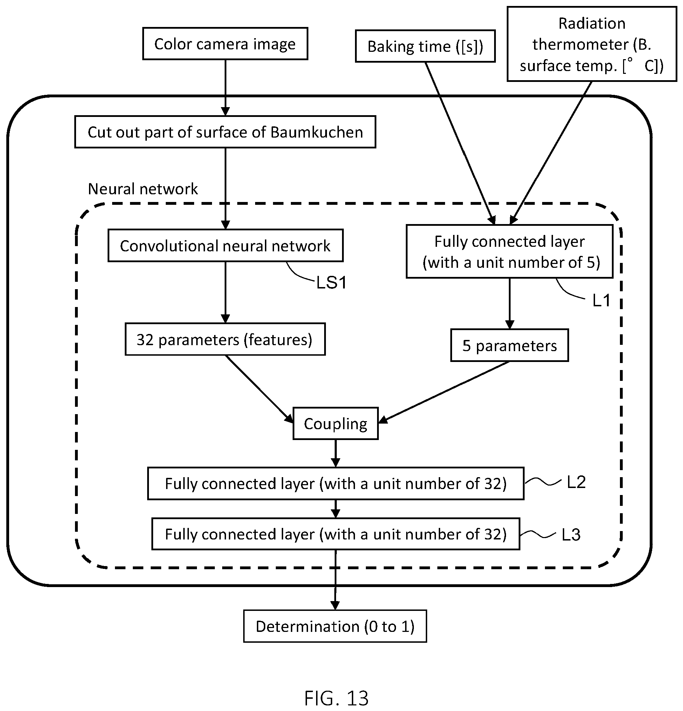

FIG. 13 illustrates an exemplary configuration of a neural network used for the decision process. In the implementation shown in FIG. 13, an image of a portion of the Baumkuchen surface is cut out from a color camera image. The cut-out image is input to a convolutional neural network LS1. The convolutional neural network LS1 outputs 32 parameters (i.e., features). Further, values of baking time and Baumkuchen surface temperature are input to a fully connected layer L1 with a unit number of 5, for example. This fully connected layer L1 outputs 5 parameters. The 32 parameters and the 5 parameters are coupled and then input to another fully connected layer L2. The output of the fully connected layer L2 is input to a subsequent fully connected layer L3, and the fully connected layer L3 outputs a determination value (e.g., 0 to 1).

In the implementation shown in FIG. 13, an image from the camera is input to a convolutional neural network, and sensor data is input to a fully connected layer. The image feature that has passed the convolutional neural network and the parameters of the sensor data that have passed the fully connected layer are coupled and then input to another fully connected layer. After this fully connected layer and yet another fully connected layer, a determination value about doneness is output. Thus, a machine learning model may be composed of a convolutional neural network that converts an input image into a feature, a first input layer that receives sensor data as input, a second input layer that receives, as input, parameters resulting from a combination of the image feature and the output of the input layer for sensor data, and a layer that further converts the output of the second input layer. Thus, using a neural network configured to combine an image and sensor data enables determination of doneness based on the image and sensor data. It will be understood that the neural network used for the determination process is not limited to the configuration shown in FIG. 13. For example, the number of fully connected layers and the number of parameters may be set appropriately as necessary. Further, the sensor data input to the fully connected layer L1 is not limited to the examples in FIG. 13. For example, at least one of the rotational speed of the roller 3, the temperature in the oven, and baking time may be input to the fully connected layer L1.

If the determination value about doneness decided on at step S5 satisfies a predetermined requirement (YES at step S6), the control unit 8 moves the roller 3 from the baking position for the oven 2 to the batter application position and terminates baking. For example, if the determination value is not lower than a predetermined threshold, the control unit 8 determines that baking is complete and causes the moving mechanism to perform the operation of removing the Baumkuchen from the oven.

If the determination value about doneness decided on at step S5 does not satisfy the predetermined requirement (NO at step S6), the control unit 8 returns to step S3 and acquires an image, and repeats the process of steps S4 to S6. In the implementation shown in FIG. 11, the process for determining doneness is performed for each of the images in a group. Thus, for each of the images in the group captured during at least one turn of the roller 3, the determination of doneness and the process for deciding whether the baking is to be terminated based on the determination are performed.

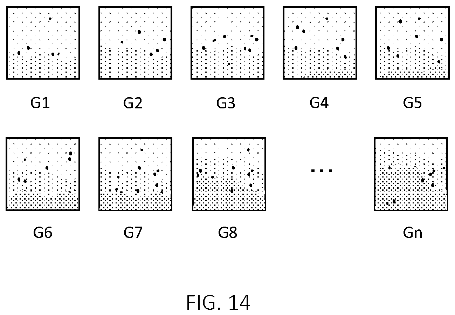

FIG. 14 illustrates an example of a group of images acquired by the control unit 8 from the initiation until the completion of baking. For example, after initiation of baking, one image is captured by the camera 7 at predetermined intervals (for example, every 0.5 seconds). The control unit 8 successively acquires images captured by the camera 7. In the example shown in FIG. 14, *n* images, G1 to Gn, are acquired. For images G1 to G(n-1), the determination value about doneness does not satisfy the requirement and, for the nth image Gn, the determination value about doneness satisfies the requirement. When the nth image Gn is acquired, baking is terminated.

In the above-discussed implementation, a determination of doneness and a decision on whether baking is to be terminated are performed for each image; alternatively, a determination of doneness and a decision about termination of baking may be done for a plurality of images.

Further, in the above-discussed implementation, the sensor data acquired represents baking time and temperature. The sensor data acquired by the control unit 8 may represent the rotational speed of layered Baumkuchen batter on the roller. At step S4 in FIG. 11, the control unit 8 may acquire the rotational speed of the roller 3 detected by the rotation sensor. The control unit 8 may determine doneness based on the images and on rotational speed. Further, the control unit 8 may acquire the speed of circumferential movement of the outer peripheral surface of the Baumkuchen batter based on images from the camera 7 and on rotational speed.

For example, the diameter D1 of the outer periphery of the layered batter on the roller 3 can be measured in the image shown in FIG. 12. The diameter D1 obtained from the image and the rotational speed of the roller 3 acquired from the rotation sensor may be used to calculate the speed of circumferential movement of the outer peripheral surface of the batter. The control unit 8 may use the speed of circumferential movement of the outer peripheral surface of the batter and the image to determine doneness. This enables a determination that takes account of changes in baking conditions that depend on the amount of layering of batter. Further, the control unit 8 may use the diameter D1 and the image to determine doneness. In such implementations, too, a determination is possible that takes account of changes in baking conditions that depend on the amount of layering of batter.

### (Exemplary Learning Process)

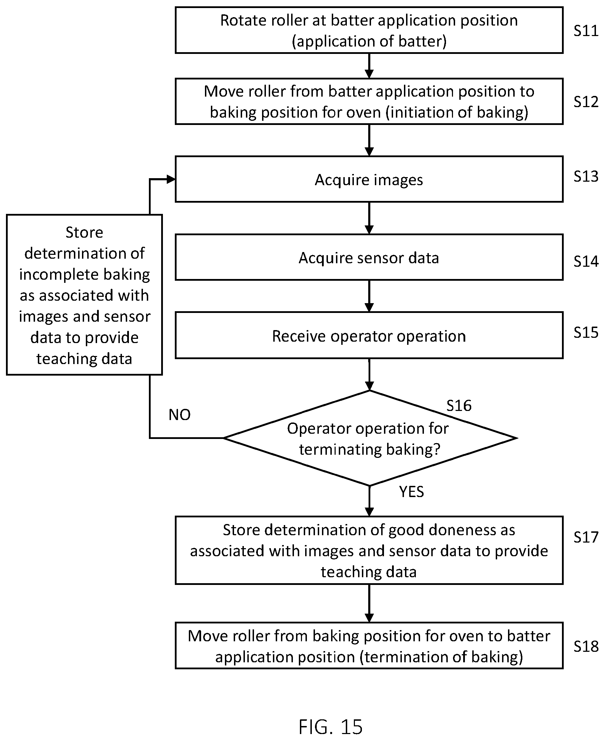

FIG. 15 is a flow chart illustrating an exemplary process for collecting teaching data for the learning process based on the baking operation on the Baumkuchen baking machine 1. In the exemplary implementation shown in FIG. 15, the Baumkuchen baking machine 1 applies one layer of batter to the roller 3 in accordance with operations by the operator and bakes it. In accordance with operations by the operator, the Baumkuchen baking machine 1 rotates the roller 3 at the batter application position and applies one layer of batter to the outer peripheral surface of layered batter on the roller 3 (S11). After application, in response to an operation by the operator, the roller 3 moves from the batter application position to the baking position for the oven 2 (S12). This initiates baking. During the baking step, the roller 3 with layered Baumkuchen batter is located at the baking position for the oven 2 and is rotated.

The control unit 8 acquires, from the camera 7, an image of the outer peripheral surface of the batter rotating together with the roller 3 (S13). The process for acquiring an image may be performed, for example, in the same manner as at step S3 in FIG. 11. The control unit 8 acquires sensor data in synchronization with acquisition of the image (S14). The sensor data acquired is from the same sensors from which data is acquired at step S5 in FIG. 11.

During baking of the Baumkuchen, the Baumkuchen baking machine 1 is ready to receive an operator operation for terminating baking (S15). Specifically, the operator is allowed to perform an operation on the Baumkuchen baking machine 1 for moving the roller 3 from the baking position to the batter application position at any moment within the period of time for which the roller 3 with layered batter is rotating at the baking position for the oven 2. When the operator performs an operation for moving the roller 3 from the baking position to the batter application position, baking is terminated.

During baking, if there is no operation by the operator for terminating baking for a predetermined period of time (NO at step S16), the control unit 8 estimates that the operator has determined that baking is incomplete. In this case, the control unit 8 links the determination that baking is incomplete with the image acquired at step S13 and the sensor data acquired at step S14 and stores them as teaching data on the storage device. Thereafter, the control unit 8 performs the image acquisition process of step S13 once again, and repeats the process of steps S14 to S16. For example, the process of steps S13 to S16 is performed for each of the images in the group captured during at least one turn of the roller 3.

During baking, if there is an operation by the operator for terminating baking (YES at S16), the control unit 8 estimates that the operator has determined that the doneness is good. In this case, the control unit 8 links the determination that doneness is good with the image acquired at step S13 and the sensor data acquired at step S14 and stores them as teaching data on the storage device. The operator's operation for terminating baking is an operator operation for moving the roller 3 from the baking position to the batter application position. When the roller 3 is moved from the baking position, baking is terminated (S18).

As a result of the process shown in FIG. 15, a group of images of the rotating outer peripheral surface of the layered batter on the roller 3 that are covering at least one entire turn are linked with the determination of doneness and stored. The learning unit 84 of the control unit 8 uses the determination of doneness linked with the group of images as teaching data to perform machine learning, and generates a learning-enhanced model. Although not limiting, the machine learning may be performed by deep learning using a neural network with the configuration shown in FIG. 13, for example.

By way of example, an exemplary learning process using a neural network model will be described. An image and sensor data that are to serve as teaching data are input to a model before learning, which provides output (i.e., determination result), and the learning unit 84 compares it with a determination result serving as teaching data to adjust the weights of different layers to further increase matching rate. For example, in the case of a model with the configuration shown in FIG. 13, a stored image is input as teaching data to the convolutional neural network LS1, and stored sensor data linked with this image (for example, baking time and surface temperature) are input to the fully connected layer L1. The output of the model in response to this input (i.e., determination value) is compared with the determination result serving as teaching data linked with the input image. The weighting parameters for different layers in the neural network are adjusted to increase the matching rate between the output of the model and the teaching data. Teaching data with a large number of images are used to perform the learning process to adjust the weighting parameters for the model. The model with weights that have been adjusted by the learning process represents a learning-enhanced model.

It will be understood that the learning process by the control unit 8 is not limited to machine learning using a neural network. Other machine learning techniques may be used, such as those using regression analysis or decision tree.

For example, when a skilled pastry chef is operating the Baumkuchen baking machine 1 to bake a Baumkuchen, the control unit 8 may link the determination estimated from the chef's operation with images and sensor data at the time of the determination and store them as teaching data. As machine learning is performed using stored teaching data about baking by a chef's operations, a learning-enhanced model can be generated that enables the same control of baking time that is done by this chef.

The process shown in FIG. 15 is an exemplary process for generating teaching data for baking of one layer. The process of FIG. 15 is repeatedly performed the number of times equal to a predetermined number of layers until completion of baking of one Baumkuchen. Thus, teaching data for one Baumkuchen is generated. For example, one operator (i.e., pastry chef), in baking a plurality of Baumkuchen, may repeat the process of FIG. 15 to generate teaching data. Teaching data for a plurality of Baumkuchen is generated by a single operator. The control unit may receive a designation of a teaching data set to be used for learning from out of teaching data sets for a plurality of Baumkuchen by a single operator.

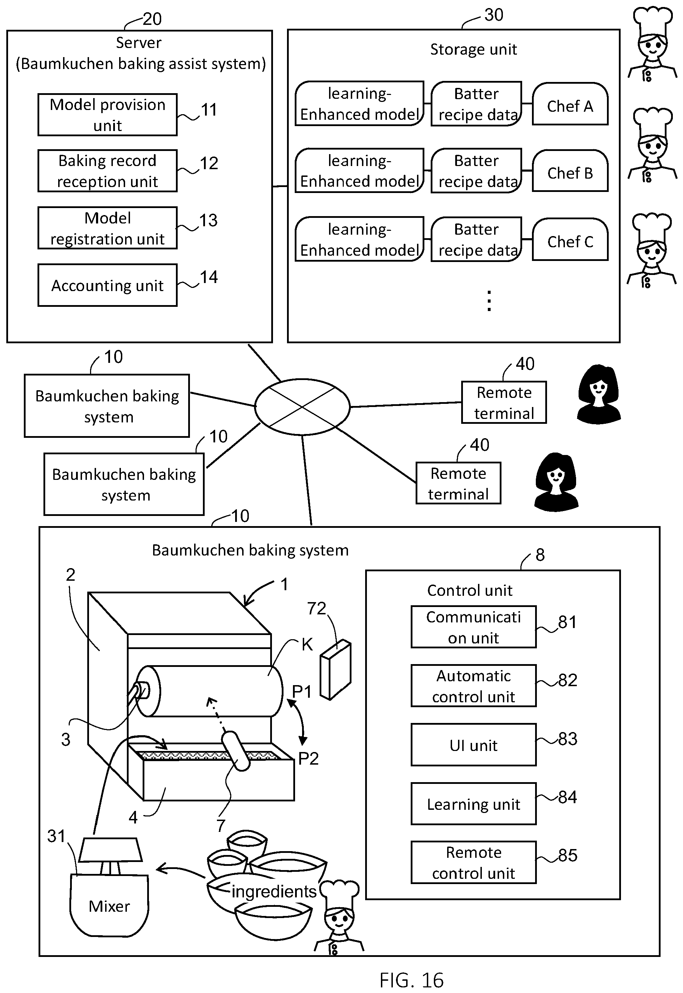

FIG. 16 shows a variation of a Baumkuchen baking system and a Baumkuchen baking assist system. In the implementation shown in FIG. 16, a storage unit 30 accessible to a server 20 stores a plurality of learning-enhanced models in association with batter recipe data and baking conditions (by way of example, chef data). The batter recipe data is data indicating a combination of ingredients of Baumkuchen batter and the relevant preparation procedure. The batter recipe data indicating the combination of ingredients of the batter used for baking for generating the teaching data for a learning-enhanced model and the relevant preparation procedure is associated with that particular learning-enhanced model. Thus, the storage unit 30 stores data indicating ingredients of batter, a method of preparing the batter, and control for baking a Baumkuchen using that batter.

Alternatively, the storage unit 30 may store a learning-enhanced model and batter recipe data with which no chef data is associated. For example, the storage unit 30 may store a learning-enhanced model that has learned a standard way of baking, not specific to any particular chef, and batter recipe data indicating a basic combination of batter ingredients and the relevant preparation method in association with each other. Such a learning-enhanced model and batter recipe data may be stored as "plain" data, for example. When an operator in a confectionary with a Baumkuchen baking system 10 attempts to devise an original batter recipe or if a basic recipe is sufficient, the operator may designate the learning-enhanced model and batter recipe data with which no chef data is associated (e.g., plain data).

The Baumkuchen baking system 10 further includes a mixer 31. In the Baumkuchen baking system 10, a control unit 8 acquires the learning-enhanced model and the associated batter recipe data from the server 20. In a preparation stage for baking using a learning-enhanced model, i.e., prior to baking, the control unit 8 outputs the batter recipe data to be presented to the operator. The output of the batter recipe data may be, for example, display of a video or a still image on the display, printing by a printer, voice output, or transmission to the operator's terminal, or a combination of at least two of these manners. The operator may prepare batter in accordance with the output information.

The control unit 8 may acquire, from the server 20, a learning-enhanced model and batter recipe data associated with the chef data of a chef designated by the operator, for example. The Baumkuchen baking system 10 bakes batter prepared from the combination of ingredients and preparation procedure indicated in the acquired batter recipe data through control using the acquired learning-enhanced model. Thus, a Baumkuchen with a quality substantially equal to that of a Baumkuchen offered by a chef can be made.

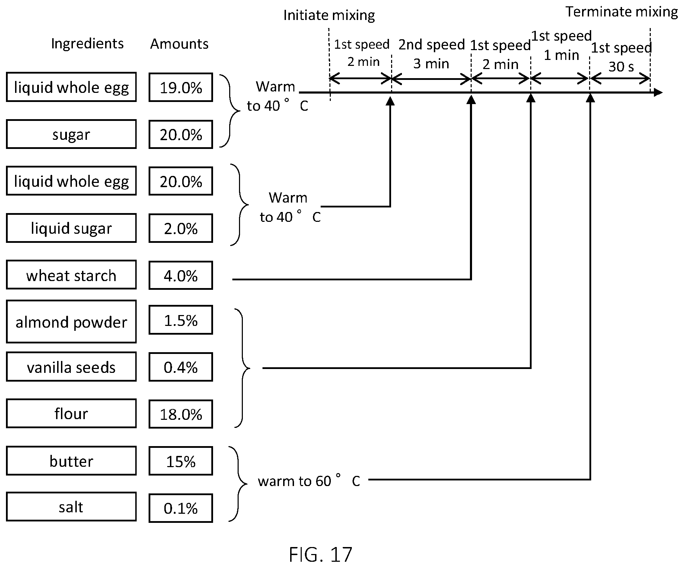

FIG. 17 illustrates an example of information indicated in batter recipe data. The batter recipe data of FIG. 17 contains a combination of batter ingredients. The data about a combination of batter ingredients contains ingredients and their amounts. The amount of each batter ingredient may be expressed as a percentage (%), as in FIG. 17, or may be expressed as a weight (g) or in other units. In some implementations, the amounts may be omitted. Further, the batter recipe data indicates the timing of feeding of each ingredient into the mixer and mixing conditions. The mixing conditions include mixing time and mixing speed (i.e. rotational speed of the mixer). In the implementation in FIG. 17, the batter recipe data further contains the temperatures of the ingredients when fed into the mixer. The batter recipe data is not limited to the exemplary contents shown in FIG. 17. For example, some of the information shown in FIG. 17 may be omitted. The batter recipe data may further contain at least one of the specific weight or temperature of the batter at the time of termination of mixing.

The control unit 8 may control the mixer 31 based on the batter recipe data. For example, the control unit 8 may notify the operator of the order and timing of feeding of the various ingredients indicated in the batter recipe data, and may receive input from the operator to the effect that an ingredient has been fed into the mixer 31. The control unit 8 may control the timing of operation and speed of the mixer 31 based on the timing of feeding of the various ingredients and on the mixing time and mixing speed indicated in the batter recipe data.

Alternatively, the Baumkuchen baking system 10 may further include feeders (not shown) that hold batter ingredients and feed the ingredients into the mixer 31. The control unit 8 may control the ingredient feeding operation by the feeders in accordance with the timing of feeding of the ingredients into the mixer 31 indicated in the batter recipe data. This enables automatic control of the timing of feeding of ingredients into the mixer 31, i.e., the points of time at which the mixer starts to mix the ingredients, using the batter recipe data.

A temperature regulator (e.g., heater) may be provided in each feeder to regulate the temperature of the relevant ingredient. In such implementations, the control unit 8 may control the temperature regulator for each ingredient feeder based on the temperature of the relevant ingredient indicated in the batter recipe data. This enables automatic regulation of the temperatures of the ingredients using the batter recipe data.

### (Other Variations)

In the above-described implementations, baking time (i.e., time at which the roller is to be moved from the baking position) is controlled based on the determination of doneness using images from the camera 7; alternatively, the value to be controlled by the control unit 8 is not limited to baking time. For example, at least one of the rotational speed of the roller 3 and the temperature in the oven may be controlled based on a group of images of the outer peripheral surface of the Baumkuchen batter at the baking position for the oven captured by the camera 7, the group of images covering at least one entire turn. In such implementations, the control unit 8 may use a learning-enhanced model generated by machine learning to decide, based on a group of images, how to control at least one of the rotation speed and the temperature in the oven. The learning-enhanced model may be, for example, a data set for performing a process in which an image of the outer peripheral surface of batter is input and at least one of rotational speed and oven temperature is output to serve as control information. The control unit 8 uses, as teaching data, at least one of the rotational speed and oven temperature detected during a baking process that occurs as the operator operates the Baumkuchen baking machine, as well as images from the camera 7, to generate such learning-enhanced model as discussed above.

For example, the control unit 8 may adjust the rotational speed of the roller 3 depending on changes over time in the diameter of the batter indicated by images captured by the camera 7 or on changes along the axial direction in the diameter (i.e., irregularities in shape on the outer peripheral surface). Alternatively, the control unit 8 may adjust the heating power of the heater 22 of the oven 2 depending on the doneness determined based on images.

In addition to referring to a group of images, the control unit 8 may decide how to control at least one of rotational speed and oven temperature, based on at least one of the rotational speed, baking time and oven temperature acquired when the group of images were acquired. This decision process may use a data set that, when at least one of rotational speed, baking time and oven temperature and images of the outer peripheral surface of batter are input as a learning-enhanced model, enables outputting of control information. Further, the control unit 8 may generate such a learning-enhanced model based on operations by the operator of the Baumkuchen baking machine. For example, the control unit 8 may detect an operation by the operator with respect to at least one of rotational speed and oven temperature, and generate a learning-enhanced model using, as teaching data, a group of images of the outer peripheral surface of the batter captured during a period including the time of detection of the operator operation and the detected operator operation. Examples of operator operations to be detected include, for example, an operation for adjusting the rotational speed of the roller 3 and an operation for adjusting the temperature in the oven 2.

Further, the sensor data used by the control unit 8 for the decision process is not limited to the above-mentioned examples, i.e., rotational speed, oven temperature and baking time. One or two of them may be used for the decision process. Further, other sensor data may be used for the decision process. For example, in addition to images from the camera 7, the rotational speed of the roller 3 may be used in performing the decision process to enable a decision that considers changes in baking conditions that depend on rotational speed. Furthermore, in addition to images from the camera 7, oven temperature may be used in performing the decision process, which will enable a decision that considers changes in baking conditions that depend on oven temperature. Further, in addition to images from the camera 7, baking time may be used in performing the decision process, which will enable a decision that considers changes in baking time.

Furthermore, batter information relating to Baumkuchen batter may be used in the decision process. The batter information may include, for example, at least one of the set of physical properties of the batter in the batter container before application, or the combination of ingredients of the batter (including, for example, the composition or percentages of flour, egg and butter and, in addition, inclusions representing toppings in the batter, such as plain, chocolate, green tea, coffee, and strawberry). The physical properties of the batter include, for example, batter temperature, the specific weight of the batter, and the viscosity of the batter. For example, when acquiring a plurality of images of the outer peripheral surface of batter from the camera 7, the control unit 8 may further acquire batter information relating to the batter. In such implementations, the control unit 8, in the decision process, decides on a time at which the roller 3 is to be moved from the baking position for the oven to the batter application position based on the baked color of the outer peripheral surface of the batter indicated by the group of images and, in addition, the acquired batter information.

A learning-enhanced model may be used for this decision process. For example, the learning-enhanced model may be data that, when an image of the outer peripheral surface of batter and batter information are input, enables outputting of the determination of doneness based on the baked color indicated by the image. The control unit 8 may generate a learning-enhanced model by means of machine learning that uses, as teaching data, a determination by the operator regarding doneness estimated based on an operator operation of the Baumkuchen baking machine, batter information, and a group of images of the outer peripheral surface of the batter at the baking position for the oven covering at least one entire turn in a period of time including the time of determination.

The Baumkuchen baking machine 1 may include an input unit or sensor for acquiring batter information. The control unit 8 may acquire batter information via the input unit or from the sensor. For example, the Baumkuchen baking machine 1 may be provided with at least one of a weight sensor that measures the weight of batter in the batter container 4, a batter temperature sensor that measures the temperature of batter in the batter container 4, and a volume sensor that measures the volume of batter in the batter container 4. Alternatively, the UI unit 83 may receive, from the operator, batter information as input.

Although embodiments of the present invention have been described, the present invention is not limited to these embodiments.

### REFERENCE SIGNS LIST

1: Baumkuchen baking machine
2: oven
3: roller
4: batter container
5: arms
6: actuator
7: camera
8: control unit
10: Baumkuchen baking system
20: server (Baumkuchen baking assist system)
30: storage unit

## Claims

1. A system comprising:
a server (20); and
a Baumkuchen baking system comprising:
a communication unit (82) adapted to communicate data with the server;
a Baumkuchen baking machine (1) including an oven (2), a batter container (4), a roller (3) capable of moving between a baking position for the oven and the batter container, and a camera (7) adapted to photograph a portion of an outer peripheral surface of layered Baumkuchen batter on the roller; and
a control unit (8) adapted to control the Baumkuchen baking machine,
wherein:
the server is capable of accessing a storage unit (30) adapted to store a plurality of learning-enhanced models obtained by learning a doneness determination or baking control based on an image of an outer peripheral surface of layered Baumkuchen batter on the roller being baked; and
the control unit includes an automatic control unit (82) adapted to determine doneness or baking control, using a learning-enhanced model of the plurality of learning-enhanced models provided by the server, based on an image, captured by the camera, of an outer peripheral surface of Baumkuchen batter currently being baked at a baking position for the oven and use a result of determination to automatically control baking of each layer of the Baumkuchen batter,
wherein each learning-enhanced model is associated with a baking condition,
wherein the control unit (8) further includes a user interface unit (83) adapted to receive, from an operator, input of a baking condition for a Baumkuchen to be manufactured, and
wherein the server is configured to provide the learning-enhanced model associated with the baking condition input by the operator to the control unit.

2. The system according to claim 1, wherein:
the storage unit (30) accessible to the server (20) further stores, in association with each of the plurality of learning-enhanced models, chef data indicating a pastry chef who has contributed to creation of teaching data used for learning for this particular learning-enhanced model;
the control unit (8) is adapted to receive a designation of a chef by the operator; and
the automatic control unit (82) determines the doneness or baking control based on the image captured by the camera (7) using the learning-enhanced model provided by the server and associated with the chef data indicating the pastry chef designated by the operator.

3. The system according to claim 1 or 2, wherein the control unit (8) further includes a remote control unit (85) adapted to provide, in real time, an image captured by the camera (7) of the outer peripheral surface of the Baumkuchen batter currently being baked to a remote terminal (40) with which the remote control unit is capable of communicating data via the communication unit (81) and, in accordance with an operation instruction received from the remote terminal, control baking of each layer of the Baumkuchen batter.

4. The system according to claim 3, wherein the remote control unit (85) uses the learning-enhanced model provided by the server (20) to determine the doneness of or baking control for the Baumkuchen batter based on the image captured by the camera (7) of the outer peripheral surface of the Baumkuchen batter currently being baked at the baking position, and provide information about the determination to the remote terminal (40) together with the image in real time.

5. The system according to any one of claims 1 to 4, wherein:
the control unit (8) further includes a learning unit (84) adapted to create, as teaching data for learning, data indicating a result of determination of doneness or baking control for each layer of the batter estimated from an operator operation by manual control during baking on the Baumkuchen baking machine (1); and
the control unit (8) provides, to the server (20) via the communication unit (81), the teaching data created by the learning unit or a learning-enhanced model generated through learning using the teaching data.

6. The system according to any one of claims 1 to 5, wherein the control unit (8) acquires, from the server (20), batter recipe data indicating a combination of batter ingredients and a batter preparation procedure associated with the learning-enhanced model provided by the server, and provides, as output, the batter recipe data to the operator of the Baumkuchen baking machine.

7. The system according to any one of claims 1 to 6, wherein the server (20) comprises:
a model provision unit (11) adapted to provide the learning-enhanced model to the Baumkuchen baking system ; and
a baking record reception unit (12) adapted to receive, from the Baumkuchen baking system, record data indicating a past record of baking of a Baumkuchen through automatic control of the Baumkuchen baking machine (1) based on an image captured by the camera (7) using the learning-enhanced model provided by the model provision unit.

8. The system according to claim 7, wherein:
the storage unit (30) stores, in association with each of the plurality of learning-enhanced models, chef data indicating a pastry chef who has contributed to creation of teaching data used for learning of that learning-enhanced model; and
the model provision unit (11) provides, to the Baumkuchen baking system, a learning-enhanced model associated with chef data indicating a pastry chef input into in the Baumkuchen baking system by the operator.

9. The system according to claims 7 or 8, wherein the server (20) further comprises:
a model registration unit (13) adapted to receive a learning-enhanced model from the Baumkuchen baking system and store the model on the storage unit (30), the learning-enhanced model generated through learning using, as teaching data, a result of determination of doneness or baking control for each layer of the batter estimated from an operator operation by manual control during baking on the Baumkuchen baking machine (1) and an image captured by the camera (7) of an outer peripheral surface of Baumkuchen batter currently being baked by the manual control.

10. The system according to claim 8, wherein the server (20) further comprises:
an accounting unit (14) adapted to use the record data received by the baking record reception unit (12) to calculate a use fee for the learning-enhanced model used by the Baumkuchen baking system and a reward for the pastry chef indicated in the chef data associated with the learning-enhanced model.

11. A method of manufacturing a Baumkuchen by the system of any one of claims 1 to 10, the method comprising:
accessing a storage unit (30) storing a plurality of learning-enhanced models obtained by learning a doneness determination or baking control based on an image of an outer peripheral surface of layered Baumkuchen batter on a roller (3) being baked;
providing a learning-enhanced model of the plurality of learning-enhanced models to the Baumkuchen baking system; and
receiving, from the Baumkuchen baking system, record data indicating a past record of baking of a Baumkuchen by automatically controlling the Baumkuchen baking machine (1) using the provided learning-enhanced model based on an image captured by the camera (7).

12. The method of manufacturing a Baumkuchen of claim 11 by the system of any one of claims 1 to 10, the method further comprising:
receiving, from the operator, an instruction for automatic control using the learning-enhanced model; and
determining, by the control unit (8), doneness or baking control using the learning-enhanced model provided by the server (20) based on an image, captured by the camera (7), of an outer peripheral surface of Baumkuchen batter currently being baked at the baking position for the oven (2) and uses a result of determination to automatically control baking of each layer of the Baumkuchen batter.

13. A computer program comprising instructions to cause the system of any one of claims 1 to 10 to execute the steps of the method of claim 11 or 12.

14. A non-transitory storage medium having stored thereon the computer program of claim 13.

## Patentansprüche

1. System, umfassend:
einen Server (20); und
ein Baumkuchen-Backsystem, umfassend:
eine Kommunikationseinheit (82), die für die Datenkommunikation mit dem Server ausgelegt ist;
eine Baumkuchen-Backmaschine (1) mit einem Ofen (2), einem Teigbehälter (4), einer Walze (3), die sich zwischen einer Backposition für den Ofen und dem Teigbehälter bewegen kann, und einer Kamera (7), die dazu ausgelegt ist, einen Abschnitt einer Außenumfangsfläche von geschichtetem Baumkuchenteig auf der Walze zu fotografieren; und
eine Steuereinheit (8), die dazu ausgelegt ist, die Baumkuchen-Backmaschine zu steuern,
wobei:
der Server auf eine Speichereinheit (30) zugreifen kann, die dazu ausgelegt ist, eine Vielzahl von lernoptimierten Modellen zu speichern, die durch Lernen einer Backzustandsbestimmung oder Backsteuerung auf der Grundlage eines Bildes einer Außenumfangsfläche von geschichtetem Baumkuchenteig auf der Walze, der gebacken wird, erhalten werden; und
die Steuereinheit eine automatische Steuereinheit (82) umfasst, die dazu ausgelegt ist, den Backzustand oder die Backsteuerung unter Verwendung eines lernoptimierten Modells aus der Vielzahl von lernoptimierten Modellen, die vom Server bereitgestellt werden, auf der Grundlage eines von der Kamera aufgenommenen Bildes einer Außenumfangsfläche von Baumkuchenteig, der derzeit an einer Backposition für den Ofen gebacken wird, zu bestimmen und ein Ergebnis der Bestimmung zu verwenden, um das Backen jeder Schicht des Baumkuchenteigs automatisch zu steuern,
wobei jedes lernoptimierte Modell mit einem Backzustand in Verbindung steht,
wobei die Steuereinheit (8) ferner eine Benutzerschnittstelleneinheit (83) umfasst, die dazu ausgelegt ist, von einem Bediener eine Eingabe eines Backzustands für einen Baumkuchen, der hergestellt werden soll, zu empfangen, und
wobei der Server so konfiguriert ist, dass er das lernoptimierte Modell, das mit dem vom Bediener eingegebenen Backzustand in Verbindung steht, für die Steuereinheit bereitstellt.

2. System nach Anspruch 1, wobei:
die für den Server (20) zugängliche Speichereinheit (30) in Verbindung mit jedem der Vielzahl von lernoptimierten Modellen ferner Bäckerdaten speichert, die einen Bäcker angeben, der zur Erstellung von Lehrdaten beigetragen hat, die für das Lernen für dieses bestimmte lernoptimierte Modell verwendet werden;
die Steuereinheit (8) so ausgelegt ist, dass sie eine vom Bediener vorgenommene Benennung eines Bäckers empfängt; und
die automatische Steuereinheit (82) den Backzustand oder die Backsteuerung auf der Grundlage des von der Kamera (7) aufgenommenen Bildes unter Verwendung des vom Server bereitgestellten lernoptimierten Modells und in Verbindung mit den Bäckerdaten, die den vom Bediener benannten Bäcker angeben, bestimmt.

3. System nach Anspruch 1 oder 2, wobei die Steuereinheit (8) ferner eine Fernsteuereinheit (85) umfasst, die dazu ausgelegt ist, in Echtzeit ein von der Kamera (7) aufgenommenes Bild der Außenumfangsfläche des Baumkuchenteigs, der gerade gebacken wird, für ein entferntes Endgerät (40) bereitzustellen, mit dem die Fernsteuereinheit über die Kommunikationseinheit (81) Daten kommunizieren kann, und gemäß einer von dem entfernten Endgerät empfangenen Betriebsanweisung das Backen jeder Schicht des Baumkuchenteigs zu steuern.

4. System nach Anspruch 3, wobei die Fernsteuereinheit (85) das vom Server (20) bereitgestellte lernoptimierte Modell verwendet, um den Backzustand oder die Backsteuerung für den Baumkuchenteig auf der Grundlage des von der Kamera (7) aufgenommenen Bildes der Außenumfangsfläche des Baumkuchenteigs, der gerade an der Backposition gebacken wird, zu bestimmen und Informationen über die Bestimmung zusammen mit dem Bild in Echtzeit für das entfernte Endgerät (40) bereitzustellen.

5. System nach einem der Ansprüche 1 bis 4, wobei:
die Steuereinheit (8) ferner eine Lerneinheit (84) umfasst, die dazu ausgelegt ist, als Lehrdaten für das Lernen Daten zu erstellen, die ein Ergebnis der Bestimmung des Backzustands oder der Backsteuerung für jede Schicht des Teigs angeben, die aus einem Bedienerbetrieb durch manuelle Steuerung während des Backens auf der Baumkuchen-Backmaschine (1) geschätzt wird; und
die Steuereinheit (8) die von der Lerneinheit erzeugten Lehrdaten oder ein lernoptimiertes Modell, das durch Lernen unter Verwendung der Lehrdaten erzeugt wird, über die Kommunikationseinheit (81) für den Server (20) bereitstellt.

6. System nach einem der Ansprüche 1 bis 5, wobei die Steuereinheit (8) vom Server (20) Teigrezeptdaten abruft, die eine Kombination von Teigzutaten und ein Teigzubereitungsverfahren angeben, die mit dem vom Server bereitgestellten lernoptimierten Modell in Verbindung stehen, und die Teigrezeptdaten für den Bediener der Baumkuchen-Backmaschine als Ausgabe bereitstellt.

7. System nach einem der Ansprüche 1 bis 6, wobei der Server (20) Folgendes umfasst:
eine Modellbereitstellungseinheit (11), die dazu ausgelegt ist, das lernoptimierte Modell für das Baumkuchen-Backsystem bereitzustellen; und
eine Backaufzeichnungsempfangseinheit (12), die dazu ausgelegt ist, vom Baumkuchen-Backsystem Aufzeichnungsdaten zu empfangen, die eine vergangene Aufzeichnung des Backens eines Baumkuchens durch automatische Steuerung der Baumkuchen-Backmaschine (1) auf der Grundlage eines von der Kamera (7) aufgenommenen Bildes unter Verwendung des von der Modellbereitstellungseinheit bereitgestellten lernoptimierten Modells anzeigen.

8. System nach Anspruch 7, wobei:
die Speichereinheit (30) in Verbindung mit jedem der Vielzahl von lernoptimierten Modellen Bäckerdaten speichert, die einen Bäcker angeben, der zur Erstellung von Lehrdaten beigetragen hat, die für das Lernen dieses lernoptimierten Modells verwendet werden; und
die Modellbereitstellungseinheit (11) für das Baumkuchen-Backsystem ein lemoptimiertes Modell bereitstellt, das mit den Bäckerdaten in Verbindung steht, die einen Bäcker angeben, der von dem Bediener in das Baumkuchen-Backsystem eingegeben wurde.

9. System nach Anspruch 7 oder 8, wobei der Server (20) ferner Folgendes umfasst:
eine Modellregistrierungseinheit (13), die dazu ausgelegt ist, ein lernoptimiertes Modell vom Baumkuchen-Backsystem zu empfangen und das Modell auf der Speichereinheit (30) zu speichern, wobei das lernoptimierte Modell durch Lernen unter Verwendung eines Ergebnisses der Bestimmung des Backzustands oder der Backsteuerung für jede Schicht des Teigs, die aus einem Bedienerbetrieb durch manuelle Steuerung während des Backens auf der Baumkuchen-Backmaschine (1) geschätzt wird, und eines von der Kamera (7) aufgenommenen Bildes einer Außenumfangsfläche des Baumkuchenteigs, der gerade durch die manuelle Steuerung gebacken wird, als Lehrdaten erzeugt wird.

10. System nach Anspruch 8, wobei der Server (20) ferner Folgendes umfasst:
eine Abrechnungseinheit (14), die dazu ausgelegt ist, die von der Backaufzeichnungsempfangseinheit (12) empfangenen Aufzeichnungsdaten zu verwenden, um eine Nutzungsgebühr für das vom Baumkuchen-Backsystem verwendete lernoptimierte Modell und eine Belohnung für den Bäcker zu berechnen, der in den mit dem lernoptimierten Modell in Verbindung stehenden Bäckerdaten angegeben ist.

11. Verfahren zur Herstellung eines Baumkuchens durch das System nach einem der Ansprüche 1 bis 10, wobei das Verfahren Folgendes umfasst:
Zugreifen auf eine Speichereinheit (30), die eine Vielzahl von lernoptimierten Modellen speichert, die durch Lernen der Bestimmung eines Backzustands oder der Backsteuerung auf der Grundlage eines Bildes einer Außenumfangsfläche von geschichtetem Baumkuchenteig auf einer Walze (3), der gebacken wird, erhalten werden;
Bereitstellen eines lernoptimierten Modells aus der Vielzahl von lernoptimierten Modellen für das Baumkuchen-Backsystem; und
Empfangen von Aufzeichnungsdaten von dem Baumkuchen-Backsystem, die eine vergangene Aufzeichnung des Backens eines Baumkuchens anzeigen, durch automatisches Steuern der Baumkuchen-Backmaschine (1) unter Verwendung des bereitgestellten lernoptimierten Modells auf der Grundlage eines von der Kamera (7) aufgenommenen Bildes.

12. Verfahren zur Herstellung eines Baumkuchens nach Anspruch 11 durch das System nach einem der Ansprüche 1 bis 10, wobei das Verfahren ferner Folgendes umfasst:
Empfangen einer Anweisung vom Bediener zur automatischen Steuerung unter Verwendung des lernoptimierten Modells; und
Bestimmen des Backzustands oder der Backsteuerung durch die Steuereinheit (8) unter Verwendung des vom Server (20) bereitgestellten lernoptimierten Modells auf der Grundlage eines von der Kamera (7) aufgenommenen Bildes der Außenumfangsfläche des Baumkuchenteigs, der gerade an der Backposition für den Ofen (2) gebacken wird, und Verwenden eines Bestimmungsergebnisses, um das Backen jeder Schicht des Baumkuchenteigs automatisch zu steuern.

13. Computerprogramm, das Anweisungen umfasst, um das System nach einem der Ansprüche 1 bis 10 zu veranlassen, die Schritte des Verfahrens nach Anspruch 11 oder 12 auszuführen.

14. Nichtflüchtiges Speichermedium, auf dem das Computerprogramm nach Anspruch 13 gespeichert ist.

## Revendications

1. Système comprenant :
un serveur (20), et
un système de cuisson de Baumkuchen comprenant :
une unité de communication (82) adaptée à communiquer des données avec le serveur,
une machine de cuisson de Baumkuchen (1) comprenant un four (2), un bac à pâte (4), un cylindre (3) capable de se déplacer entre une position de cuisson propre au four et le bac à pâte, et une caméra (7) adaptée à photographier une portion d'une surface périphérique extérieure de la pâte de Baumkuchen en couches sur le cylindre, et
une unité de commande (8) adaptée à commander la machine de cuisson de Baumkuchen,
étant entendu que :
le serveur est capable d'accéder à une unité de stockage (30) adaptée à stocker une pluralité de modèles améliorés par apprentissage obtenus par apprentissage de la détermination du degré de cuisson ou d'une commande de cuisson en fonction d'une image d'une surface périphérique extérieure de la pâte de Baumkuchen en couches sur le cylindre en cours de cuisson, et
l'unité de commande comprend une unité de commande automatique (82) adaptée à déterminer le degré de cuisson ou la commande de cuisson, au moyen d'un modèle amélioré par apprentissage issu de la pluralité de modèles améliorés par apprentissage fournis par le serveur, en fonction d'une image, prise par la caméra, d'une surface périphérique extérieure de la pâte de Baumkuchen en cours de cuisson en une position de cuisson propre au four, et à utiliser le résultat de cette détermination pour commander automatiquement la cuisson de chaque couche de pâte de Baumkuchen,
chaque modèle amélioré par apprentissage étant associé à une condition de cuisson,
l'unité de commande (8) comprenant en outre une unité d'interface utilisateur (83) adaptée à recevoir la saisie, faite par un opérateur, d'une condition de cuisson pour un Baumkuchen à produire, et
le serveur étant conçu pour fournir, à l'unité de commande, le modèle amélioré par apprentissage associé à la condition de cuisson saisie par l'opérateur.

2. Système selon la revendication 1, dans lequel :
l'unité de stockage (30) accessible au serveur (20) stocke en outre, en association avec chaque modèle de la pluralité de modèles améliorés par apprentissage, des données de chef indiquant un chef pâtissier ayant contribué à la création des données d'apprentissage utilisées pour l'apprentissage de ce modèle amélioré par apprentissage particulier,
l'unité de commande (8) est adaptée à recevoir une désignation d'un chef par l'opérateur, et
l'unité de commande automatique (82) détermine le degré de cuisson ou la commande de cuisson en fonction de l'image prise par la caméra (7) au moyen du modèle amélioré par apprentissage fourni par le serveur et associé aux données de chef indiquant le chef pâtissier désigné par l'opérateur.

3. Système selon la revendication 1 ou 2, dans lequel l'unité de commande (8) comprend en outre une unité de commande à distance (85) adaptée à fournir, en temps réel, une image prise par la caméra (7) de la surface périphérique extérieure de la pâte de Baumkuchen en cours de cuisson à un terminal à distance (40) avec lequel l'unité de commande à distance est capable de communiquer des données par l'intermédiaire de l'unité de communication (81) et, selon une instruction de fonctionnement reçue en provenance du terminal distant, à commander la cuisson de chaque couche de pâte de Baumkuchen.

4. Système selon la revendication 3, dans lequel l'unité de commande à distance (85) utilise le modèle amélioré par apprentissage fourni par le serveur (20) pour déterminer le degré de cuisson ou la commande de cuisson de la pâte de Baumkuchen en fonction de l'image prise par la caméra (7) de la surface périphérique extérieure de la pâte de Baumkuchen en cours de cuisson à la position de cuisson, et pour transmettre des informations concernant cette détermination au terminal distant (40), conjointement avec l'image, en temps réel.

5. Système selon l'une quelconque des revendications 1 à 4, dans lequel :
l'unité de commande (8) comprend en outre une unité d'apprentissage (84) adaptée à créer, en tant que données d'apprentissage, des données indiquant un résultat de détermination du degré de cuisson ou de la commande de cuisson pour chaque couche de pâte, estimé à partir d'une opération effectuée par un opérateur par commande manuelle au cours de la cuisson sur la machine de cuisson de Baumkuchen (1), et
l'unité de commande (8) fournit, au serveur (20) par l'intermédiaire de l'unité de communication (81), les données d'apprentissage créées par l'unité d'apprentissage ou un modèle amélioré par apprentissage généré par un apprentissage à l'aide des données d'apprentissage.

6. Système selon l'une quelconque des revendications 1 à 5, dans lequel l'unité de commande (8) acquiert, à partir du serveur (20), des données de recette de pâte indiquant une combinaison d'ingrédients de pâte et une procédure de préparation de pâte associée au modèle amélioré par apprentissage fourni par le serveur, et fournit en sortie les données de recette de pâte à l'opérateur de la machine de cuisson de Baumkuchen.

7. Système selon l'une quelconque des revendications 1 à 6, dans lequel le serveur (20) comprend :
une unité de fourniture de modèle (11) adaptée à fournir le modèle amélioré par apprentissage au système de cuisson de Baumkuchen, et
une unité de réception d'enregistrements de cuisson (12) adaptée à recevoir, à partir du système de cuisson de Baumkuchen, des données d'enregistrement indiquant un historique de cuisson d'un Baumkuchen par commande automatique de la machine de cuisson de Baumkuchen (1) en fonction d'une image prise par la caméra (7) au moyen du modèle amélioré par apprentissage fourni par l'unité de fourniture de modèle.

8. Système selon la revendication 7, dans lequel :
l'unité de stockage (30) stocke, en association avec chaque modèle de la pluralité de modèles améliorés par apprentissage, des données de chef indiquant un chef pâtissier ayant contribué à la création des données d'apprentissage utilisées pour l'apprentissage de ce modèle amélioré par apprentissage, et
l'unité de fourniture de modèles (11) fournit, au système de cuisson de Baumkuchen, un modèle amélioré par apprentissage associé à des données de chef, indiquant un chef pâtissier, saisies dans le système de cuisson de Baumkuchen par l'opérateur.

9. Système selon la revendication 7 ou 8, dans lequel le serveur (20) comprend en outre :
une unité de mise en registre de modèle (13) adaptée à recevoir un modèle amélioré par apprentissage en provenance du système de cuisson de Baumkuchen et à stocker ce modèle sur l'unité de stockage (30), le modèle amélioré par apprentissage étant généré par apprentissage au moyen, comme données d'apprentissage, d'un résultat de détermination du degré de cuisson ou de la commande de cuisson pour chaque couche de pâte, estimé à partir d'une opération effectuée par un opérateur par commande manuelle au cours de la cuisson sur la machine de cuisson de Baumkuchen (1), et d'une image prise par la caméra (7) d'une surface périphérique extérieure de la pâte de Baumkuchen en cours de cuisson par la commande manuelle.

10. Système selon la revendication 8, dans lequel le serveur (20) comprend en outre :
une unité de comptabilité (14) adaptée à utiliser des données d'enregistrement reçues par l'unité de réception d'enregistrements de cuisson (12) pour calculer des frais d'utilisation du modèle amélioré par apprentissage utilisé par le système de cuisson de Baumkuchen et une rémunération pour le chef pâtissier indiqué dans les données de chef associées au modèle amélioré par apprentissage.

11. Procédé de production de Baumkuchen par le système selon l'une quelconque des revendications 1 à 10, le procédé comprenant :
l'accès à une unité de stockage (30) dans laquelle sont stockés une pluralité de modèles améliorés par apprentissage obtenus par apprentissage d'une détermination du degré de cuisson ou d'une commande de cuisson en fonction d'une image d'une surface périphérique extérieure de la pâte de Baumkuchen en couches sur un cylindre (3) en cours de cuisson,
la fourniture, au système de cuisson de Baumkuchen, d'un modèle amélioré par apprentissage de la pluralité de modèles améliorés par apprentissage, et
la réception, à partir du système de cuisson de Baumkuchen, de données d'enregistrement indiquant un historique de cuisson d'un Baumkuchen obtenu par commande automatique de la machine de cuisson de Baumkuchen (1) au moyen du modèle amélioré par apprentissage fourni, en fonction d'une image prise par la caméra (7).

12. Procédé de production de Baumkuchen selon la revendication 11 par le système selon l'une quelconque des revendications 1 à 10, le procédé comprenant en outre :
la réception, en provenance de l'opérateur, d'une instruction de commande automatique utilisant le modèle amélioré par apprentissage, et
la détermination, par l'unité de commande (8), du degré de cuisson ou de la commande de cuisson à l'aide du modèle amélioré par apprentissage fourni par le serveur (20) en fonction d'une image, prise par la caméra (7), d'une surface périphérique extérieure de la pâte de Baumkuchen en cours de cuisson à la position de cuisson propre au four (2), et l'utilisation du résultat de cette détermination pour commander automatiquement la cuisson de chaque couche de pâte de Baumkuchen.

13. Programme informatique comprenant des instructions destinées à amener le système selon l'une quelconque des revendications 1 à 10 à exécuter les étapes du procédé selon la revendication 11 ou 12.

14. Support de stockage non transitoire sur lequel est stocké le programme informatique selon la revendication 13.
